# EUROPEAN PATENT APPLICATION

(11) **EP 1 420 086 A1**
(43) Date of publication of application: **19.05.2004**
(21) Application number: 03026224.0
(22) Date of filing: 14.11.2003
(51) Int. Cl.: C25D 13/20, C25D 9/04

(54) **Process for electrocoating and articles made therefrom**

(30) Priority: 14.11.2002 US 426187 P
(71) Applicant: Elisha Holding LLC, Moberly, Missouri 65270 (US)
(72) Inventor: Klos, Klaus-Peter, Dr., 65468 Trebur (DE); Grolmes, Holger Manfred, 59597 Erwitte (DE)
(74) Representative: Burrichter, Arwed Andreas, Dr.

(57) **Abstract**

The disclosure relates to a process for applying a multilayer protective coating to a substrate having an electrically conductive surface, comprising: (a) a first method of forming a silicate layer upon said electrically conductive surface, said first method comprising contacting at least a portion of said surface with a first medium comprising at least one silicate and having a basic pH and wherein said first medium is substantially free of chromates, to form a silicate layer, and (b) a second method of electrolytically applying a synthetic resin layer upon the surface of said silicate layer, said second method comprising contacting at least a portion of said surface of said silicate layer with a second medium comprising a resinous ingredient, applying an electric current to said second medium wherein said surface is employed as an electrode, to form a synthetic resin layer. The multilayer protective coating exhibits excellent corrosion and adhesion properties and is environmentally acceptable.

## Description

This Application claims benefit of U.S. Provisional Patent Application Serial No. 60/426,187, filed on November 14, 2002. The disclosure of that Provisional Patent Application is hereby incorporated by reference.

### FIELD OF THE INVENTION

The instant invention relates to a process for forming a deposit or pretreatment on the surface of a metallic or conductive surface, and then electrolytically applying a coating.

### BACKGROUND OF THE INVENTION

Silicates have been used in electrocleaning operations to clean steel, tin, among other surfaces. Electrocleaning is typically employed as a cleaning step prior to an electroplating operation. Using "Silicates As Cleaners In The Production of Tinplate" is described by L.J. Brown in February 1966 edition of Plating; hereby incorporated by reference. Processes for electrolytically forming a protective layer or film by using an anodic method are disclosed by U.S. Patent No. 3,658,662 (Casson, Jr. et al.), and United Kingdom Patent No. 498,485. U.S. Patent No. 5,352,342 to Riffe, which issued on October 4, 1994 and is entitled "Method And Apparatus For Preventing Corrosion Of Metal Structures" that describes using electromotive forces upon a zinc solvent containing paint. The disclosure of the above identified publications and patents is hereby incorporated by reference.

Electrodeposition ("e-coating") as a coating application method is widely used in the automotive coating industry and involves deposition of a film-forming composition under the influence of an applied electrical potential. Electrodeposition has bcome increasingly important in the coatings industry because by comparison with non-electrophoretic coating means, electrodeposition offers higher paint utilization, outstanding corrosion protection and low environmental contamination.

One of the drawbacks associated with e-coating is that in order to achieve sufficient adhesion of the e-coat it is often necessary to subject the substrate to a suitable pretreatment before entering the electrocoating line. Pretreatments common in the art include phosphating and/or chromating of the substrate. Phosphating treatments include iron and zinc phosphates and provide barriers that can be classified as porous and may permit moisture passage to the plated coating. Also, such pretreatments often employ chemicals that are environmentally incompatible such as phosphates and chromates. On the list of substances that are considered particularly environmentally incompatible is hexavalent chromium, a substance that is conventionally employed in galvanization processes used for imparting anti-corrosion properties to automobile parts.

Known processes fail to provide a substrate having improved adhesion to e-coatings. There is a need in this art for a substrate with surface, which is substantially free of undesirable metals, that is compatible with e-coatings.

### SUMMARY OF THE INVENTION

The instant invention solves problems associated with conventional practices by providing a process comprising a first method for forming a protective layer upon a metallic or metal containing substrate (e.g., the protective layer can range from about 100 to about 2,500 Angstroms thick), and a second method for electrocoating the layer formed by the first method. The first method can be electrolytic or electroless (e.g., refer to U.S. Patent Application Serial Nos. 10/211,051 which corresponds to PCT/US02/24716, 10/211,094 which corresponds to PCT/US02/24671 and 10/211,029 which corresponds to PCT/US02/24446). The first method of the present invention is normally conducted by contacting (e.g., immersing) a substrate having an electrically conductive surface into a silicate containing bath or medium wherein a current is introduced to (e.g., passed through) the bath and the substrate is the cathode. The second or electrocoating method of the invention is normally conducted by contacting (e.g., immersing) a substrate treated by the first method into a bath or medium wherein in a current is introduced in order to deposit a paint.

The first method can form a mineral layer comprising an amorphous matrix surrounding or incorporating metal silicate crystals upon the substrate. The characteristics of the mineral layer are described in greater detail in the copending and commonly assigned patents and patent applications identified below.

The second method can electrolytically apply a coating upon the surface treated by the first method. By "electrolytic coating" or "e-coat" or "e-coating" it is meant that a sufficiently conductive part is contacted with a medium having charged paint particles wherein a current is employed to deposit the particles upon the conductive part. The conductive part can be employed as an anode or a cathode.

The inventive processes are a marked improvement over conventional methods by obviating the need for solvents or solvent containing systems to form a corrosion resistant layer. In contrast, to conventional methods the inventive process can be substantially solvent free. By "substantially solvent free" it is meant that less than about 5 wt.%, and normally less than about 1 wt.% volatile organic compounds (V.O.C.s) are present in the electrolytic environment.

The inventive process is also a marked improvement over conventional methods by reducing, if not eliminating, chromate and/or phosphate containing compounds (and issues attendant with using these compounds such as waste disposal, worker exposure, among other undesirable environmental impacts). While the inventive process can be employed to enhance chromated or phosphated surfaces, the inventive process can replace these surfaces with a more environmentally desirable surface. The inventive process, therefore, can be "substantially chromate free" and "substantially phosphate free" and in turn produce articles that are also substantially chromate (hexavalent and trivalent) free and substantially phosphate free. The inventive process can also be substantially free of heavy metals such as chromium, lead, cadmium, cobalt, barium, among others. By substantially chromate free, substantially phosphate free and substantially heavy metal free it is meant that less than 5 wt.% and normally about 0 wt.% chromates, phosphates and/or heavy metals are present in a process for producing an article or the resultant article.

### CROSS REFERENCE TO RELATED PATENTS AND PATENT APPLICATIONS

The subject matter herein is related to U.S. Patent Application Serial Nos. 10/211,051 which corresponds to PCT/US02/24716, 10/211,094 which corresponds to PCT/US02/24671 and 10/211,029 which corresponds to PCT/US02/24446, all filed on August 02, 2002. The subject matter of this invention is related to Non-Provisional Patent Application Serial No. 09/814,641, filed on March 22, 2001, and entitled "An Energy Enhanced Process For Treating A Conductive Surface And Products Formed Thereby" (and corresponds to PCT Patent Application Serial No. PCT/US01/09293), Serial No. 09/775,072, filed on February 01, 2001 that is a continuation in part of 09/532,982, filed on March 22, 2000 that is a continuation in part of 09/369,780, filed on August 06, 1999 (now U.S. Patent No. 6,153,080) that is a continuation in part of Serial No. 09/122,002, filed on July 24, 1998 that is a continuation in part of Serial No. 09/016,250, filed on January 30, 1998 (now U.S. Patent No. 6,149,794) in the names of Robert L. Heimann et al. and entitled "An Electrolytic Process For Forming A Mineral". The subject matter herein is also related to U.S. Provisional Patent Application Serial Nos. 60/036,024, filed on January 31, 1997 and Serial No. 60/045,446, filed on May 2, 1997 and entitled "Non-Equilibrium Enhanced Mineral Deposition". The mineral layer disclosed herein is related to U.S. Patent Application Serial No. 09/789,086, filed on February 20, 2001, and entitled "Corrosion Resistant Coatings Containing An Amorphous Phase". The disclosure (including the terms defined therein) of the previously identified publications, patents and patent applications is hereby incorporated by reference.

### DETAILED DESCRIPTION

The instant invention comprises a first method for first depositing or forming a beneficial surface (e.g., a mineral containing coating or film) upon a metallic or an electrically conductive surface, and a second method for applying at least one e-coating upon the beneficial surface.

In particular, the instant invention provides a process for applying a multilayer protective coating to a substrate having an electrically conductive surface, comprising:
(a) a first method of forming a silicate layer upon said electrically conductive surface, said first method comprising contacting at least a portion of said surface with a first medium comprising at least one silicate and having a basic pH and wherein said first medium is substantially free of chromates, to form a silicate layer, and
(b) a second method of electrolytically applying a synthetic resin layer upon the surface of said silicate layer, said second method comprising contacting at least a portion of said surface of said silicate layer with a second medium comprising an resinous ingredient, applying an electric current to said second medium wherein said surface is employed as an electrode, to form a synthetic resin layer.

Substrates coated in accordance with the process of the instant invention possess improved corrosion resistance. Surprisingly it was found that the intermediate silicate layer leads to excellent adhesion of the synthetic resin layer ("e-coat") without prior phosphate treatment of the surface. Particularly good adhesion properties of the synthetic resin layer can be obtained when employing a cathodically applied electrocoating epoxy resin as resinous ingredient in the electrocoating method (b).

The first method employs a silicate medium, e.g., containing soluble mineral components or precursors thereof, and utilizes an electrically enhanced method to treat an electrically conductive surface (e.g., to obtain a mineral coating or film upon a metallic or conductive surface). By "mineral containing coating", "mineralized film" or "mineral" it is meant to refer to a relatively thin coating or film which is formed upon a metal or conductive surface wherein at least a portion of the coating or film comprises at least one metal containing mineral, e.g., an amorphous phase or matrix surrounding or incorporating crystals comprising a zinc disilicate. By "electrolytic" or "electrodeposition" or "electrically enhanced", it is meant to refer to an environment created by introducing or passing an electrical current through a silicate containing medium while in contact with an electrically conductive substrate (or having an electrically conductive surface) and wherein the substrate functions as the cathode. By "metal containing", "metal", or "metallic", it is meant to refer to sheets, shaped articles, fibers, rods, particles, continuous lengths such as coil and wire, metallized surfaces, among other configurations that are based upon at least one metal and alloys including a metal having a naturally occurring, or chemically, mechanically or thermally modified surface. Typically a naturally occurring surface upon a metal will comprise a thin film or layer comprising at least one oxide, hydroxides, carbonates, sulfates, chlorides, among others. The naturally occurring surface can be removed or modified by using the inventive process.

The second method comprises applying an e-coating. The e-coating can be anodic or cathodic and employ epoxy, acrylic, among other resins. Epoxy e-coatings can be employed for improving corrosion resistance, and acrylic e-coatings for improving resistance to UV exposure. While any suitable e-coating can be employed, desirable results have been obtained by using a cathodic epoxy coating. An example of a suitable epoxy comprises about 80 to about 90% wt. percent water (e.g., deionized water), less than about 5wt.% solvent, about 1 to about 10wt.% pigment and about 10 to about 15% resin. An example of a suitable commercially available cathodic e-coat comprises PPG's Powercron® 640, 645 or 648 epoxies. After application, the e-coating is normally heat cured (e.g., about 120-200 C for about 20 minutes). Cathodic epoxies normally have a film thickness of about 04. to 1.5 mils and are corrosion/humidity resistant.

The invention further relates to a corrosion resistant article comprising a metal body and a substantially chromate free protective coating applied on at least one surface of said metal body, said protective coating comprising:
(a) a silicate layer comprising at least one silicate; and
(b) a synthetic resin layer comprising at least one electrolytically applied synthetic resin.

It was found that the articles according to the instant invention exhibit remarkable corrosion resistance and adhesion properties. In particular, it was found that the intermediate silicate layer leads to excellent adhesion properties between the metal body and the synthetic resin. Particularly good adhesion properties were obtained when using a cationic epoxy resin as synthetic resin.

### 1. Substrate

The inventive process and methods can treat a wide range of metallic surfaces. The metallic surface refers to a metal article or body as well as a non-metallic or an electrically conductive member having an adhered metal or conductive layer. While any suitable surface can be treated by the inventive process, examples of suitable metal surfaces comprise at least one member selected from the group consisting of galvanized surfaces, sheradized surfaces, zinc (including zinc die-cast), iron, steel, brass, copper, nickel, tin, aluminum, lead, cadmium, magnesium, alloys thereof such as zinc-nickel alloys, tin-zinc alloys, zinc-cobalt alloys, zinc-iron alloys, among others. If desired, the mineral layer can be formed on a non-conductive substrate having at least one surface coated with an electrically conductive material, e.g., a metallized polymeric article or sheet, ceramic materials coated or encapsulated within a metal, among others. Examples of metallized polymer comprise at least one member selected from the group of polycarbonate, acrylonitrile butadiene styrene (ABS), rubber, silicone, phenolic, nylon, PVC, polyimide, melamine, polyethylene, polyproplyene, acrylic, fluorocarbon, polysulfone, polyphenyene, polyacetate, polystyrene, epoxy, among others. Conductive surfaces can also include carbon or graphite as well as conductive polymers (polyaniline for example).

According to one embodiment of the invention, the substrate to be treated in accordance with the process of the instant invention and/or the metal body comprised in the corrosion resistant article of the present invention is a zinc or zinc/nickel coated metal substrate. This means, that the substrate and/or the metal body has a zinc layer applied on its surface. With the term "zinc layer" as used herein it is meant any layer that contains metallic zinc or an alloy thereof such as Zn/Ni, Zn/Fe, Sn/Zn, among other zinc containing layers. Thus, the zinc layer of the instant invention can also contain additional components besides metallic zinc. For example, it is possible to apply a Zn/Ni layer. A Zn/Ni layer can be applied in a similar manner as a Zn layer by conventional electrolytic methods that are generally known and widely used in the art. In Zn/Ni plating the electrolyte usually contains hydrochloric acid rather than sulfuric acid.

The zinc layer typically has a thickness of, for example, about 1 to about 75 microns; in particular, the zinc layer typically has a thickness of, for example, about 15 to about 35 microns.

The metal surface can possess a wide range of sizes and configurations, e.g., fibers, coils, sheets including perforated acoustic panels, chopped wires, drawn wires or wire strand/rope, rods, couplers (e.g., hydraulic hose couplings), fibers, particles, fasteners (including industrial and residential hardware), brackets, nuts, bolts, screws, rivets, washers, cooling fins, stamped articles, powdered metal articles, among others. Products treated in accordance with the instant invention can be employed as automotive parts and accessories, compressors, computer parts, fasteners, generators, heavy-duty trucks, marine engines, switchgear, transformers, among others. The limiting characteristic of the inventive process to treat a metal surface is dependent upon the ability of the electrical current/energy to contact the metal surface. That is, similar to conventional electroplating technologies, a mineral surface may be difficult to apply upon a metal surface defining hollow areas or voids. This difficulty can be addressed by using a conformal anode.

The inventive process provides a flexible surface that can survive secondary processes, e.g., metal deformation resulting from riveting, sweging, crimping, among other processes, and continue to provide corrosion protection. Such is in contrast to typical corrosion inhibitors such as chromates that tend to crack when the underlying surface is deformed or shaped.

### 2. Silicate layer

The silicate containing medium can be a fluid bath, gel, spray, among other methods for contacting the substrate with the silicate medium. Examples of the silicate medium comprise a bath containing at least one silicate, a gel comprising at least one silicate and a thickener, among others. The medium can comprise a bath comprising at least one of potassium silicate, calcium silicate, lithium silicate, sodium silicate, compounds releasing silicate moieties or species, among other water soluble or dispersible silicates. The bath can comprise any suitable polar or non-polar carrier such as water, alcohol, ethers, among others. Normally, the bath comprises sodium silicate and de-ionized water and optionally at least one dopant. Typically, the at least one dopant is water soluble or dispersible within an aqueous medium.

The silicate containing medium typically has a basic pH. Normally, the pH will range from greater than about 9 to about 13 and typically, about 10 to about 12 (e.g., 11 to 11.5). The pH of the medium can be monitored and maintained by using conventional detection methods. The selected detection method should be reliable at relatively high sodium concentrations and under ambient conditions.

The silicate medium is normally aqueous and can comprise at least one water soluble or dispersible silicate in an amount from greater than about 0 to about 40 wt.%, usually, about 1 to 15 wt.% and typically about 3 to 8 wt.%. The amount of silicate in the medium should be adjusted to accommodate silicate sources having differing concentrations of silicate. Typically, the silica to alkali ration is about 3:2 but vary depending upon the concentration and grade of silicate employed in the inventive process. The silicate containing medium is also normally substantially free of heavy metals, chromates and/or phosphates.

The silicate medium can be modified by adding at least one stabilizing compound (e.g., stabilizing by complexing metals). An example of a suitable stabilizing compound comprises phosphines, sodium citrate, ammonium citrate, ammonium iron citrate, sodium salts of ethylene diamine tetraacetic acid (EDTA) and nitrilotriacetic acid (NTA), 8-hydroxylquinoline, 1,2-diaminocyclohexane-tetracetyic acid, diethylene-triamine pentacetic acid, ethylenediamine tetraacetic acid, ethylene glycol bisaminoethyl ether tetraacetic acid, ethyl ether diaminetetraacetic acid, N'-hydroxyethylethylenediamine triacetic acid, 1-methyl ethylene diamine tetraacetic acid, nitriloacetic acid, pentaethylene hexamine, tetraethylene pentamine, triethylene tetraamine, among others.

The silicate medium can also be modified by adding colloidal particles such as colloidal silica (commercially available as Ludox® AM-30, HS-40, among others). In one aspect, the silicate medium has a basic pH and comprises at least one water soluble silicate, water and colloidal silica. The colloidal silica has a particle size ranging from about 10nm to about 50nm. The size of particles in the medium ranges from about 10nm to 1 micron and typically about 0.05 to about 0.2 micron. The medium has a turbidity of about 10 to about 700, typically about 50 to about 300 Nephelometric Turbidity Units (NTU) as determined in accordance with conventional procedures.

According to one embodiment of the invention, the silicate medium further comprises at least one reducing agent. An example of a suitable reducing agent comprises sodium borohydride, sodium hypophosphite, dimethylamino borane and hydrazine phosphorus compounds such as hypophosphide compounds, phosphate compounds, among others. According to one embodiment, the concentration of sodium borohydride is typically 1 gram per liter of bath solution to about 20 grams per liter of bath solution more typically 5 grams per liter of bath solution to about 15 gram per liter of bath solution. In one illustrative and preferred embodiement, 10 grams of sodium borohydride per liter of bath solution is utilized. According to one embodiment of the invention, the silicate medium comprises at least one reducing agent. Sodium borohydride comprises a particularly suitable reducing agent. The concentration of the reducing agent in the bath is typcially about 0.1 wt % to about 5 wt % more typically about 0.1 wt % to about 0.5 wt %.

In a further aspect of the invention, the silicate medium is modified to include at least one dopant material. The amount of dopant can vary depending upon the properties of the dopant and desired results. Typically, the amount of dopant will range from about 0.001 wt.% to about 5 wt.% (or greater so long as the electrolyte is not adversely affected). Examples of suitable dopants comprise at least one member selected from the group of water soluble salts, oxides and precursors of tungsten, molybdenum (e.g., molybdenum chloride, molybdenum oxide, etc.), chromium, titanium (titatantes), zircon, vanadium, phosphorus, aluminum (aluminates, chlorides, etc.), iron (e.g., iron chloride), boron (borates), bismuth, gallium, tellurium, germanium, antimony, nickel (e.g., nickel chloride, nickel oxide, etc.), cobalt (e.g., cobalt chloride, cobalt oxide, etc.), niobium (also known as columbium), magnesium and manganese, sulfur, zirconium (zirconates), zinc (e.g, zinc oxide, zinc powder), mixtures thereof, among others, and usually, salts and oxides of aluminum and iron. The dopant can comprise at least one of molybdenic acid, fluorotitanic acid and salts thereof such as titanium hydrofluoride, ammonium fluorotitanate, ammonium fluorosilicate and sodium fluorotitanate; fluorozirconic acid and salts thereof such as H₂ZrF₆, (NH₄)₂ZrF₆ and Na₂ZrF₆; among others. Alternatively, dopants can comprise at least one substantially water insoluble material such as electropheritic transportable polymers, PTFE, boron nitride, silicon carbide, silicon nitride, silica (e.g., colloidal silica such as Ludox® AM-30, HS-40, among others), aluminum nitride, titanium carbide, diamond, titanium diboride, tungsten carbide, metal oxides such as cerium oxide, powdered metals and metallic precursors such as zinc, among others.

If desired, the dopant can be dissolved or dispersed within another medium prior to introduction into the silicate medium. For example, at least one dopant can be combined with a basic compound, e.g., sodium hydroxide, and then added to the silicate medium. Examples of dopants that can be combined with another medium comprise zirconia, cobalt oxide, nickel oxide, molybdenum oxide, titanium (IV) oxide, niobium (V) oxide, magnesia, zirconium silicate, alumina, antimony oxide, zinc oxide, zinc powder, aluminum powder, among others.

The aforementioned dopants that can be employed for enhancing the mineral layer formation rate, modifying the chemistry and/or physical properties of the resultant layer, as a diluent for the electrolyte or silicate containing medium, among others. Examples of such dopants are iron salts (ferrous chloride, sulfate, nitrate), aluminum fluoride, fluorosilicates (e.g., K₂SiF₆), fluoroaluminates (e.g., potassium fluoroaluminate such as K₂AlF₅-H₂O), mixtures thereof, among other sources of metals and halogens. The dopant materials can be introduced to the metal or conductive surface in pretreatment steps prior to electrodeposition, in post treatment steps following electrodeposition (e.g., rinse), and/or by alternating electrolytic contacts in solutions of dopants and solutions of silicates if the silicates will not form a stable solution with the dopants, e.g., one or more water soluble dopants. The presence of dopants in the electrolyte solution can be employed to form tailored surfaces upon the metal or conductive surface, e.g., an aqueous sodium silicate solution containing aluminate can be employed to form a layer comprising oxides of silicon and aluminum. That is, at least one dopant (e.g., zinc) can be co-deposited along with at least one siliceous species (e.g., a mineral) upon the substrate.

The silicate medium can be modified by adding water/polar carrier dispersible or soluble polymers, and in some cases the electro-deposition solution itself can be in the form of a flowable gel consistency having a predetermined viscosity. If utilized, the amount of polymer or water dispersible materials normally ranges from about 0 wt.% to about 10 wt.%. Examples of polymers or water dispersible materials that can be employed in the silicate medium comprise at least one member selected from the group of acrylic copolymers (supplied commercially as Carbopol®), hydroxyethyl cellulose, clays such as bentonite, fumed silica, solutions comprising sodium silicate (supplied commercially by MacDermid as JS2030S), among others. A suitable composition can be obtained in an aqueous composition comprising about 3 wt% N-grade Sodium Silicate Solution (PQ Corp), optionally about 0.5 wt% Carbopol EZ-2 (BF Goodrich), about 5 to about 10 wt.% fumed silica, mixtures thereof, among others. Further, the aqueous silicate solution can be filled with a water dispersible polymer such as polyurethane to electrodeposit a mineral-polymer composite coating. The characteristics of the electro-deposition solution can also be modified or tailored by using an anode material (e.g., nickel, steel, zinc, etc.) as a source of ions which can be available for codeposition with the mineral anions and/or one or more dopants. The dopants can be useful for building additional thickness of the electrodeposited mineral layer.

The silicate medium can also be modified by adding at least one diluent or electrolyte. Examples of suitable diluent comprise at least one member selected from the group of sodium sulphate, surfactants, de-foamers, colorants/dyes, conductivity modifiers, among others. The diluent (e.g., sodium sulfate) can be employed for improving the electrical conductivity of bath, reducing the affects of contaminants entering the silicate medium, reducing bath foam, among others. When the diluent is employed as a defoamer, the amount normally comprises less than about 5 wt.% of the electrolyte, e.g., about 1 to about 2 wt.%. A diluent for affecting the electrical conductivity of the bath or electrolyte is normally in employed in an amount of about 0 wt.% to about 20 wt.%.

When employing an electrolytic environment, the first method can be established in any suitable manner including immersing the substrate, applying a silicate containing coating upon the substrate and thereafter applying an electrical current, among others. The preferred method for establishing the environment will be determined by the size of the substrate, electrodeposition time, applied voltage, among other parameters known in the electrodeposition art. The effectiveness of the electrolytic environment can be enhanced by supplying energy in the form of ultrasonic, laser, ultraviolet light, RF, IR, among others. The inventive process can be operated on a batch or continuous basis.

Subsequent to the inventive first method, the treated surfaces can be dried and then rinsed. By drying the treated surfaces, excess water is removed thereby increasing the density (or reducing the porosity) of the treated surface, and permits creating a matrix comprising partially polymerized silica and metal disilicate. The dried surface can be rinsed to remove residual material. The rinsing solution can also include at least one compound (e.g., colloidal silica such as Ludox®, silanes, carbonates, zirconates, among others) that interacts with the treated surface (rinsing is discussed below in greater detail). After rinsing the metallic surfaces is dried again which in turn can further condense or densify the treated surface.

The electrolytic environment of the first method can be preceded by and/or followed with conventional post and/or pre-treatments known in this art such as cleaning or rinsing, e.g., immersion/spray within the treatment, sonic cleaning, double countercurrent cascading flow; alkali or acid treatments, among other treatments. By employing a suitable post-treatment the solubility, corrosion resistance (e.g., reduced white rust formation when treating zinc containing surfaces), e-coat adhesion, among other properties of surface of the substrate formed by the inventive method can be improved. The post-treated surface is then electrocoated.

In one aspect of the invention, a pre-treatment comprises exposing the substrate to be treated to at least one of an acid, a base (e.g., zincate comprising zinc hydroxide and sodium hydroxide), oxidizer, among other compounds. The pre-treatment can be employed for cleaning oils, removing excess oxides or scale, equipotentialize the surface for subsequent mineralization treatments, convert the surface into a mineral precursor, among other benefits. When employing a basic pre-treatment, a pre-treated surface can be functionalized to comprise, for example, hydroxyl groups. Conventional methods for acid cleaning metal surfaces are described in ASM, Vol. 5, Surface Engineering (1994), and U.S. Patent No. 6,096,650; hereby incorporated by reference.

If desired, the first method can include a thermal post-treatment. The metal surface can be removed from the silicate medium, dried (e.g., at about 120 to about 150C for about 2.5 to about 10 minutes), rinsed in deionized water and then dried again. The dried surface may be processed further as desired; e.g. contacted with an e-coat.

In an aspect of the invention, the thermal post treatment comprises heating the surface. Typically the amount of heating is sufficient to consolidate or densify the inventive surface without adversely affecting the physical properties of the underlying metal substrate. Heating can occur under atmospheric conditions, within a nitrogen containing environment, among other gases. Alternatively, heating can occur in a vacuum. The surface may be heated to any temperature within the stability limits of the surface coating and the surface material. Typically, surfaces are heated from about 75° C to about 250° C, more typically from about 120° C to about 200° C. If desired, the heat treated component can be rinsed in water to remove any residual water soluble species and then dried again (e.g., dried at a temperature and time sufficient to remove water).

In one aspect of the invention, the post treatment comprises exposing the substrate to a source of at least one carbonate or precursors thereof. Examples of carbonate comprise at least one member from the group of gaseous carbon dioxide, lithium carbonate, lithium bicarbonate, sodium carbonate, sodium bicarbonate, potassium carbonate, potassium bicarbonate, rubidium carbonate, rubidium bicarbonate, rubidium acid carbonate, cesium carbonate, ammonium carbonate, ammonium bicarbonate, ammonium carbamate and ammonium zirconyl carbonate. Normally, the carbonate source will be water soluble. In the case of a carbonate precursor such as carbon dioxide, the precursor can be passed through a liquid (including the silicate containing medium) and the substrate immersed in the liquid. One specific example of a suitable postreatment is disclosed in U.S. Patent No. 2,462,763; hereby incorporated by reference. Another specific example of a post treatment comprises exposing a treated surface to a solution obtained by diluting ammonium zirconyl carbonate (1:4) in distilled water (e.g., Bacote® 20 supplied by Magnesium Elektron Corp). If desired, this post treated surface can be topcoated (e.g., aqueous or water borne topcoats).

In another aspect of the invention, the post treatment comprises exposing the substrate to a source comprising at least one acid source or precursors thereof. Examples of suitable acid sources comprise at least one member chosen from the group of phosphoric acid, hydrochloric acid, molybdic acid, silicic acid, acetic acid, citric acid, nitric acid, hydroxyl substituted carboxylic acid, glycolic acid, lactic acid, malic acid, tartaric acid, among other acid sources effective at improving at least one property of the treated metal surface. The pH of the acid post treatment can be modified by employing at least one member selected from the group consisting of ammonium citrate dibasic (available commercially as Citrosol® #503 and Multiprep®), fluoride salts such as ammonium bifluoride, fluoboric acid, fluorosilicic acid, among others. The acid post treatment can serve to activate the surface thereby improving the effectiveness of an e-coat. Normally, the acid source will be water soluble and employed in amounts of up to about 5 wt.% and typically, about 1 to about 2 wt.%.

In another aspect of the invention, the post treatment comprises contacting a surface treated by the inventive process with a rinse. By "rinse" it is meant that an article or a treated surface is sprayed, dipped, immersed or other wise exposed to the rinse in order to affect the properties of the treated surface. For example, a surface treated by the inventive process is immersed in a bath comprising at least one rinse. In some cases, the rinse can interact or react with at least a portion of the treated surface. Examples of suitable compounds for use in rinses comprise at least one member selected from the group of titanates, titanium chloride, tin chloride, zirconates, zirconium acetate, zirconium oxychloride, fluorides such as calcium fluoride, tin fluoride, titanium fluoride, zirconium fluoride; coppurous compounds, ammonium fluorosilicate, metal treated silicas (e.g., Ludox®), nitrates such as aluminum nitrate; sulphates such as magnesium sulphate, sodium sulphate, zinc sulphate, and copper sulphate; lithium compounds such as lithium acetate, lithium bicarbonate, lithium citrate, lithium metaborate, lithium vanadate, lithium tungstate, among others. The rinse can further comprise at least one organic compound such as vinyl acrylics, fluorosurfactancts, polyethylene wax, among others. One specific rinse comprises water, water dispersible urethane, and at least one silicate, e.g., refer to commonly assigned U.S. Patent No. 5,871,668; hereby incorporated by reference. While the rinse can be employed neat, normally the rinse will be dissolved, diluted or dispersed within another medium such as water, organic solvents, among others. While the amount of rinse employed depends upon the desired results, normally the rinse comprises about 0.1wt% to about 50 wt.% of the rinse medium. The rinse can be employed as multiple applications and, if desired, heated. In one particular aspect, the metallic surface is removed from the silicate medium, dried, rinsed or treated with a silane and then contacted with a sealer (e.g., an acrylic or urethane sealer).

Moreover, the aforementioned rinses can be modified by incorporating at least one dopant, e.g. the aforementioned dopants. The dopant can employed for interacting or reacting with the treated surface. If desired, the dopant can be dispersed in a suitable medium such as water and employed as a rinse. In one aspect of the invention, the metallic surface is removed from the silicate medium, dried (e.g., 120 C for about 10 minutes), rinsed in rinse comprising at least one dopant and then dried again.

In an aspect of the invention, an electrogalvanized panel, e.g., a zinc surface, is coated electrolytically by being placed into an aqueous sodium silicate solution. After being placed into the silicate solution, a mineral coating or film containing silicates is deposited by using relatively low voltage potential (e.g., about 1 to about 24 v depending upon the desired current density) and low current. The current density can range from about 0.7A/in2 to about 0.1 A/in2 at 12 volt constant. Normally, hydrogen is evolved at the workpiece/cathode and oxygen at the anode.

In one aspect of the invention, the workpiece is initially employed as an anode and then electrically switched (or pulsed) to the cathode. By pulsing the voltage, the workpiece can be pre-treated in-situ (prior to interaction with the electrolytic medium). Pulsing can also increase the thickness of the film or layer formed upon the workpiece. If desired, dopants (e.g., cations) can be present in the electrolyte and deposited upon the surface by pulsing either prior to or following mineralization.

In another aspect of the invention, the metal surface, e.g., zinc, aluminum, magnesium, steel, lead and alloys thereof; has an optional pretreatment. By "pretreated" it is meant to refer to a batch or continuous process for conditioning the metal surface to clean it and condition the surface to facilitate acceptance of the mineral or silicate containing coating e.g., the inventive process can be employed as a step in a continuous process for producing corrosion resistant coil steel. The particular pretreatment will be a function of composition of the metal surface and desired functionality of the mineral containing coating/film to be formed on the surface. Examples of suitable pre-treatments comprise at least one of cleaning, e.g., sonic cleaning, activating, heating, degreasing, pickling, deoxidizing, shot glass bead blasting, sand blasting, rinsing, reactive rinsing in order to functionalize (e.g, hydroxlyize) the metallic surface, among other pretreatements. One suitable pretreatment process for steel comprises:
1) 2 minute immersion in a 3:1 dilution of Metal Prep 79 (Parker Amchem),
2) two deionized water rinses,
3) 10 second immersion in a pH 14 sodium hydroxide solution,
4) remove excess solution and allow to air dry,
5) 5 minute immersion in a 50% hydrogen peroxide solution,
6) remove excess solution and allow to air dry.

In another aspect of the invention, the metal surface is pretreated by anodically cleaning the surface. Such cleaning can be accomplished by immersing the work piece or substrate into a medium comprising silicates, hydroxides, phosphates, carbonates, among other cleaning agents. By using the work piece as the anode in a DC cell and maintaining a current of about 10A/ft2 to about 150A/ft2, the process can generate oxygen gas. The oxygen gas agitates the surface of the workpiece while oxidizing the substrate's surface. The surface can also be agitated mechanically by using conventional vibrating equipment. If desired, the amount of oxygen or other gas present during formation of the mineral layer can be increased by physically introducing such gas, e.g., bubbling, pumping, among other means for adding gases.

In a further pre-treatment aspect of the invention, the work piece is exposed to the inventive silicate medium as an anode thereby cleaning the work piece (e.g., removing naturally occurring compounds). The work piece can then converted to the cathode and processed in accordance with the inventive methods.

The following sets forth the parameters which may be employed for tailoring the inventive process to obtain a desirable mineral containing coating:
1.Voltage
2. Current Density
3. Apparatus or Cell Design
4. Deposition Time
5. Programmed current and voltage variations during processing
6. Concentration of the silicate solution
7. Type and concentration of anions in solution
8. Type and concentration of cations in solution
9. Composition/surface area of the anode
10. Composition/surface area of the cathode
11. Temperature
11. Pressure
12. Type and concentration of surface active agents
13. Surface preparation ― cleaning
14. Drying after removal from the silicate medium and, in some cases, thereafter rinsing to remove residual material

The specific ranges of the parameters above depend upon the substrate to be treated, and the intended composition to be deposited. Normally, the temperature of the electrolyte bath ranges from about 25 to about 95 C (e.g., about 75C), the voltage from about 6 to 24 volts, an electrolyte solution concentration from about 1 to about 15 wt.% silicate, the current density ranges from about 0.025A/in2 and greater than 0.60A/in2 (e.g., about 180 to about 200 mA/cm2 and normally about 192 mA/cm2), contact time with the electrolyte from about 10 seconds to about 50 minutes and normally about 1 to about 15 minutes and anode to cathode surface area ratio of about 0.5:1 to about 2:1. Items 1, 2, 7, and 8 can be especially effective in tailoring the chemical and physical characteristics of the coating. That is, items 1 and 2 can affect the deposition time and coating thickness whereas items 7 and 8 can be employed for introducing dopants that impart desirable chemical characteristics to the coating. The differing types of anions and cations can comprise at least one member selected from the group consisting of Group I metals, Group II metals, transition and rare earth metal oxides, oxyanions such as molybdate, phosphate, titanate, boron nitride, silicon carbide, aluminum nitride, silicon nitride, mixtures thereof, among others.

While the process can be operated at a wide range of voltages and conditions, the typical process conditions will provide an environment wherein hydrogen is evolved at the cathode and oxygen at the anode. Without wishing to be bound by any theory or explanation, it is believed that the hydrogen evolution (e.g., electrochemical reduction of water) provides a relatively high pH at the surface to be treated. It is also believed that the oxygen reduced or deprived environment along with a high pH can cause an interaction or a reaction at the surface of the substrate being treated. It is further believed that zinc can function as a barrier to hydrogen thereby reducing, if not eliminating, hydrogen embrittlement being caused by operating the inventive process. The porosity of the surface formed by the inventive process can also affect the presence of hydrogen.

The inventive process can be modified by employing apparatus and methods conventionally associated with electroplating processes. Examples of such methods include pulse plating, horizontal plating systems, barrel, rack, adding electrolyte modifiers to the silicate containing medium, employing membranes within the bath, among other apparatus and methods. With respect to the second process, desirable results can be obtained by using the apparatus disclosed in U.S. Patent No. 6,391,180 (Hillebrand et al.); the disclosure of which is hereby incorporated by reference.

The first method can be modified by varying the composition of the anode. Examples of suitable anodes comprise graphite, platinum, zinc, iron, steel, iridium oxide, beryllium oxide, tantalum, niobium, titanium, nickel, Monel® alloys, pallidium, alloys thereof, among others. The anode can comprise a first material clad onto a second, e.g., platinum plated titanium or platinum clad niobium mesh. The anode can possess any suitable configuration, e.g., mesh adjacent to a barrel plating system. In some cases, the anode (e.g., iron or nickel) can release ions into the electrolyte bath that can become incorporated within the mineral layer. Normally, ppm concentrations of anode ions are sufficient to affect the mineral layer composition. If a dimensionally stable anode is desired, then platinum clad or plated niobium can be employed. In the event a dimensionally stable anode requires cleaning, in most cases the anode can be cleaned with sodium hydroxide solutions. Anode cleaning can be enhanced by using heat and/or electrical current.

The inventive process can be practiced in any suitable apparatus. Examples of suitable apparatus comprise rack and barrel plating, brush plating, horizontal plating, continuous lengths, among other apparatus conventionally used in electroplating metals. The articles having a metal surface to be treated (or workpiece), if desired, can be cleaned by an acid such as hydrochloric or citric acid, rinsed with water, and rinsed with an alkali such as sodium hydroxide, rinsed again with water. The cleaning and rinsing can be repeated as necessary. If desired the acid/alkali cleaning can be replaced with a conventional sonic cleaning apparatus. The workpiece is then subjected to the inventive electrolytic method thereby forming a mineral coating upon at least a portion of the workpiece surface. The workpiece is removed from the electrolytic environment, and heated. The workpiece can be heated for any length of time, typically from about 15 minutes to about 24 hours, more typically from about 1 hour to about three hours. The workpiece can be heated at any temperature below the deformation temperature of the workpiece material, but is typically heated at about 75°C to about 250° C, more typically from about 120° C to about 200° C. A typical heating program is about 2 hours at about 175° C.

The inventive process can impart improved corrosion resistance without using chromates (hex or trivalent). When a zinc surface is treated by the inventive process, the thickness (or total amount) of zinc can be reduced while achieving equivalent, if not improved, corrosion resistance. For example, when exposing a steel article to a zinc plating environment for a period of about 2.5 to about 30 minutes and then to the inventive process for a period of about 2.5 to about 30 minutes (including e-coating) white rust first occurs after about 720 hours (when tested in accordance with ASTM B-117 or Volkswagon Specification 196TL).

Normally, the surface formed by the inventive process will be rinsed, e.g., with at least one of deionized water, silane or a carbonate, prior to applying an e-coat. The secondary coatings can be employed for imparting a wide range of properties such as improved corrosion resistance to the underlying mineral layer, reduce torque tension, a temporary coating for shipping the treated workpiece, decorative finish, static dissipation, electronic shielding, hydrogen and/or atomic oxygen barrier, among other utilities. The mineral coated workpiece, with or without the secondary coating, can be used as a finished product or a component to fabricate another article.

Without wishing to be bound by any theory or explanation a silica containing layer can be formed. By silica it is meant a framework of interconnecting molecular silica such as SiO4 tetrahedra (e.g., amorphous silica, cristabalite, triydmite, quartz, among other morphologies depending upon the degree of crystalinity), monomeric or polymeric species of silicon and oxide, monomeric or species of silicon and oxide embedding colloidal species, among others. The crystalinity of the silica can be modified and controlled depending upon the conditions under which the silica is deposition, e.g., temperature and pressure. The silica containing layer may comprise: 1) low porosity silica (e.g., about 60 angstroms to 0.5 microns in thickness), 2) collodial silica (e.g., about 50 angstroms to 0.5 microns in thickness), 3) a mixture comprising 1 and 2, 4) residual silicate such as sodium silicate and in some cases combined with 1 and 2; and 5) monomeric or polymeric species optionally embedding other colloidal silica species such as colloidal silica. The formation of a silica containing layer can be enhanced by the addition of colloidal particles to the silicate medium, or a post-treatment (e.g., rinsing). The deposition of colloidal silica particles can also be affected by the presence of polyvalent metal ions. An example of suitable colloidal particles comprise colloidal silica having a size of at least about 12 nanometers to about 0.1 micron (e.g., Ludox® HS 40, AM 30, and CL). The colloidal silica can be stabilized by the presence of metals such as sodium, aluminum/alumina, among others.

If desired, the silica containing film or layer can be provided in as a secondary process. That is, a first film or layer comprising a disilicate can be formed upon the metallic surface and then a silica containing film or layer is formed upon the disilicate surface. An example of this process is described in U.S. Patent Application Serial No. 60/354,565, filed on February 05, 2002 and entitled "Method for Treating Metallic Surfaces"; the disclosure of which is hereby incorporated by reference.

Without wishing to be bound by any theory or explanation a silica containing layer can be formed upon the mineral. The silica containing layer can be chemically or physically modified and employed as an intermediate or tie-layer. The tie-layer can be used to enhance bonding to paints, coatings, metals, glass, among other materials contacting the tie-layer. This can be accomplished by binding to the top silica containing layer to an e-coat. Alternatively, the silica containing layer can be removed by using conventional cleaning methods, e.g, rinsing with de-ionized water. The silica containing tie-layer can be relatively thin in comparison to the mineral layer 100-500 angstroms compared to the total thickness of the mineral which can be 1500-2500 angstroms thick. If desired, the silica containing layer can be chemically and/or physically modified by employing the previously described post-treatments, e.g., exposure to at least one carbonate, silane or acid source. Such post-treatments can function to reduce porosity of the silica containing layer.

Without wishing to be bound by any theory or explanation, it is believed that the inventive process forms a surface that can release or provide water or related moieties. These moieties can participate in a hydrolysis or condensation reaction that can occur when curing/heating the overlying e-coat. Such participation improves the cohesive bond strength between the surface and overlying cured coating.

### 2. Synthetic resin layer

The e-coating process employed in the second method of the process of the instant invention may be practiced with conventional e-coating equipment and under conventional e-coating conditions that are well known in the art.

In electrocoat systems, an electric current is applied to a metal part immersed in a bath of oppositely charged polymer particles. The polymer particles are drawn to the metal part and the polymer is deposited on the part, forming an even, continuous film over every surface until the coating reaches the desired thickness. At that thickness, the film insulates the part, so attraction stops and electrocoating is complete. Depending on the polarity of the charge, electrocoating is classified as either anodic or cathodic.

In anodic electrocoating, the part to be coated is the anode with a positive electrical charge which attracts negatively charged polymer particles in the electrocoat bath.

In cathodic electrocoating, the part to be coated is given a negative charge, attracting the positively charged polymer particles. Cathodic electrocoat applies a negative electrical charge to the metal part which attracts positively charged paint or polymer particles.

In the process of the present invention, particularly good adhesion between the silicate layer and the synthetic resin layer was obtained when employing cathodic electrocoating systems.

The electrocoat process as practiced in the instant invention can be divided into three distinct sections:
- electrocoat bath
- post rinses
- bake oven

Optionally, the electrocoat process may further include a pretreament of the substrate such as cleaning and/or phosphating. However, it is a particular advantage of the process according to the present invention that due to the excellent adhesion between the silicate layer and the synthetic resin layer a phosphating treatment prior to electrocating is not necessary.

In the electrocoat bath a direct current is applied between the parts and a "counter" electrode. Polymer particles are attracted by the electric field to the part and are deposited to the part. An electrocoat bath ("electrodepositable coating composition") typically contains 80-90% deionized water and 10-20% polymer solids. The deionized water acts as the carrier for the polymer solids that are under constant agitation. The polymer solids typically comprise resin and pigment. Resin is the backbone of the final polymer film and provides corrosion protection, durability, and toughness. Pigments are used to provide color and gloss.

During the electrocoat process, polymer is applied to a part at a controlled film thickness, regulated by the amount of voltage applied. Once the coating reaches the desired film thickness, the part insulates and the coating process slows down. As the part exits the bath, polymer solids cling to the surface and can be be rinsed off to maintain efficiency and aesthetics. The excess polymer solids are called "drag out" or "cream coat". These post rinses can be returned to the tank to allow transfer efficiency up to 95%.

The conditions under which electrodeposition is carried out are well known in the art. Electrodeposition is usually carried out at constant voltage. The applied voltage may vary greatly and can be, for example, as low as one volt or as high as several thousand volts, although typically between 50 volts and 500 volts are employed. Current density is usually between about 1.0 ampere and 15 amperes per square foot (10.8-161.5 amperes per square meter) and tends to decrease quickly during electrodeposition indicating the formation of a continuous self-insulating film.

After deposition, the coating is typically cured at elevated temperatures by any convenient method such as by baking in ovens. The curing temperature will typically be conducted over the range of from about 120 to about 250 °C., preferably from about 120 to about 190 °C. for anywhere from about 10 to 60 minutes.

The electrocoating method in the process of the present invention can be practiced with any suitable conventional electrocoating equipment. An example for such electrocoating equipment is the equipment described in U.S. Patent No. 6,391,180, hereby incorporated by reference.

As previously mentioned, particularly good adhesion results between the silicate layer and the e-coating are obtained when using cathodic electrocoating systems. In cathodic electrocoating systems, the aqueous electrodepositable coating composition is placed in contact with an electrically conductive anode and an electrically conductive cathode. Upon passage of the electric current between the anode and the cathode while in contact with the aqueous coating compositions, an adherent film of the coating composition will deposit in a substantially continuous manner on the cathode.

The e-coating medium ("second medium", "electrocoating bath", "electrodepositable coating composition", "coating composition") employed in the process of the invention contains at least one resinous ingredient. Typically, such resinous ingredient will be an ionic resinous ingredient. Examples for suitable resinous ingredients are cathodically applied electrocoating epoxy resins, anodically applied electrocoating epoxy resins, cathodically applied electrocoating acrylic resins, and/or anodically applied electrocoating acrylic resins. Whereas any resinous ingredient suitable for electrodeposition may be employed in the process of the invention, particularly good adhesion results between the silicate layer and the synthetic resin layer are obtained when employing a cationic resinous ingredient in the e-coating medium. Even more advantageous adhesion results are obtained when using cathodically applied blocked isocyanate epoxy resins as resinous ingredient in the e-coating medium.

In the following, examples of cationic resinous ingredients that can be used in the e-coating medium of the present invention will be described in more detail.

Cationic resinous ingredients for use in the e-coating medium of the present invention will typically include a cationic resin and a crosslinking agent.

Examples of cationic resins that can be used in the e-coating medium are amine salt group-containing polymers and quaternary ammonium salt group-containing polymers which are the acid-solubilized reaction products of polyepoxides and primary amines, secondary amines, tertiary amines and mixtures thereof. These cationic resins are typically present in combination with blocked isocyanate curing agents. The isocyanate can be present as a fully blocked iocyanate or the isocyanate can be partially blocked and reacted into the amine salt polymer backbone.

Examples of polyepoxides are polymers having a 1,2-epoxy equivalency greater than one and preferably about two, that is, polyepoxides which have on an average basis two epoxy groups per molecule. The preferred polyepoxides are polyglycidyl ethers of cyclic polyols. Particularly preferred are polyglycidyl ethers of polyhydric phenols such as bisphenol A. These polyepoxides can be produced by etherification of polyhydric phenols with epihalohydrin or dihalohydrin such as epichlorohydrin or dichlorohydrin in the presence of alkali. Examples of polyhydric phenols are 2,2-bis(4-hydroxhphenyl)propane, 1,1-bis-(4-hydroxyphenyl)-ethane, 2-methyl-1,1-bis-(4-hydroxyphenyl)propane, 2,2-bis-(4-hydroxy-3-tertiarybu tylphenyl)propane, bis-(2-hydroxynaphthyl)methane, 1,5-dihydroxy-3-naphthalene or the like.

Besides polyhydric phenols, other cyclic polyols can be used in preparing the polyglycidyl ethers of cyclic polyol derivatives. Examples of other cyclic polyols would be alicyclic polyols, particularly cycloaliphatic polyols, such as 1,2-cyclohexanediol, 1,4-cyclohexanediol, 1,2-bis(hydroxymethyl)cyclohexane, 1,3-bis(hydroxymethyl)cyclohexane and hydrogenated bisphenol A.

The polyepoxides typically have molecular weights of at least 200 and preferably within the range of 200 to 2000, and more preferably about 340 to 2000.

The polyepoxides are preferably chain extended with a polyether or a polyester polyol which increases rupture voltage of the composition and enhances flow and coalescence. Examples of polyether polyols and conditions for chain extension are disclosed in U.S. Pat. No. 4,468,307, column 2, line 67, to column 4, line 52, the portions of which are hereby incorporated by reference. Examples of polyester polyols for chain extension are disclosed in U.S. Pat. No. 4,148,772, column 4, line 42, to column 5, line 53, the portions of which are hereby incorporated by reference.

The polyepoxide is reacted with a cationic group former, for example, an amine and acid. The amine can be a primary, secondary or tertiary amine and mixtures thereof.

The preferred amines are monoamines, particularly hydroxyl-containing amines. Although monoamines are preferred, polyamines such as ethylene diamine, diethylamine triamine, triethylene tetraamine, N-(2-aminoethyl)ethanolamine and piperizine can be used but their use in large amounts is not preferred because they are multifunctional and have a greater tendency to gel the reaction mixture than monoamines.

Tertiary and secondary amines are preferred to primary amines because the primary amines are polyfunctional with regard to reaction to epoxy groups and have a greater tendency to gel the reaction mixture. When using polyamines or primary amines, special precautions should be taken to avoid gelation. For example, excess amine can be used and the excess can be vacuum stripped at the completion of the reaction. Also, the polyepoxide resin can be added to the amine to insure that excess amine will be present.

Examples of hydroxyl-containing amines are alkanolamines, dialkanolamines, trialkanolamines, alkylalkanolamines, arylalkanolamines and arylalkylalkanolamines containing from 2 to 18 carbon atoms in the alkanol, alkyl and aryl chains. Specific examples include ethanolamine, N-methylethanolamine, diethanolamine, N-phenylethanolamine, N,N-dimethylethanolamine, N-methyldiethanolamine and triethanolamine.

Amines which do not contain hydroxyl group such as mono, di and tri-alkyl amines and mixed alkyl-aryl amines and substituted amines in which the substituents are other than hydroxyl and in which the substituents do not detrimentally affect the epoxyamine reaction can also be used. Specific examples of these amines are ethylamine, propylamine, methylethylamine, diethylamine, N,N-dimethylcyclohexylamine, triethylamine, N-benzyldimethylamine, dimethylcocamine and dimethyltallowamine. Also, amines such as hydrazine and propylene imine can be used. Ammonia can also be used and is considered for the purposes of this application to be an amine.

Mixtures of the various amines described above can be used. The reaction of the primary and/or secondary amine with the polyepoxide resin takes place upon mixing the amine with the product. The reaction can be conducted neat, or, optionally in the presence of suitable solvent. Reaction may be exothermic and cooling may be desired. However, heating to a moderate temperature, that is, within the range of 50 to 150 °C., may be used to hasten the reaction.

The reaction product of the primary or secondary amine with the polyepoxide resin attains its cationic character by at least partial neutralization with acid. Examples of suitable acids include organic and inorganic acids such as formic acid, acetic, acid, lactic acid, phosphoric acid and carbonic acid. The extent of neutralization will depend upon the particular product involved. It is only necessary that sufficient acid be used to disperse the product in water. Typically, the amount of acid used will be sufficient to provide at least 30 percent of the total theroetical neutralization. Excess acid beyond that required for 100 percent total theoretical neutralization can also be used.

In the reaction of the tertiary amine with the polyepoxide resin, the tertiary amine can be prereacted with the acid such as those mentioned above to form the amine salt and the salt reacted with the polyepoxide to form the quaternary ammonium salt group-containing resin. The reaction is conducted by mixing the amine salt and the polyepoxide resin together in the presence of water. Typically, the water is employed on the basis of about 1.75 to about 20 percent by weight based on total reaction mixture solids.

Alternately, the tertiary amine can be reacted with the polyepoxide resin in the presence of water to form a quaternary ammonium hydroxide group-containing polymer which, if desired, may be subsequently acidified. The quaternary ammonium hydroxide-containing polymers can also be used without acid, although their use is not preferred.

In forming the quaternary ammonium base group-containing polymers, the reaction temperature can be varied between the lowest temperature at which reaction reasonably proceeds, for example, room temperature, or in the usual case, slightly above room temperature, to a maximum temperature of 100 °C. (at atmospheric pressure). At greater than atmospheric pressure, higher reaction temperatures can be used. Preferably, the reaction temperature ranges between about 60 to 100 °C. Solvent for the reaction is usually not necessary, although a solvent such as a sterically hindered ester, ether or sterically hindered ketone may be used if desired.

In addition to the primary, secondary and tertiary amines disclosed above, a portion of the amine which is reacted with the polyepoxide-polyether polyol product can be the ketimine of a polyamine. This is described in U.S. Pat. No. 4,104,147 in column 6, line 23, to column 7, line 23, the portions of which are hereby incorporated by reference. The ketimine groups will decompose upon dispersing the amine-epoxy reaction product in water resulting in free primary amine groups which would be reactive with curing agents which are described in more detail below.

Besides resins containing amine salts and quaternary ammonium base groups, resins containing other cationic groups can be used in the practice of the second method. Examples of other cationic resins are quaternary phosphonium resins and ternary sulfonium resins. However, resins containing amine salt groups and quaternary ammonium base groups are preferred and the amine salt group-containing resins are the most preferred.

The extent of cationic group formation of the resin should be selected that when the resin is mixed with aqueous medium, a stable dispersion will form. A stable dispersion is one which does not settle or is one which is easily redispersible if some sedimentation occurs. In addition, the dispersion should be of sufficient cationic character that the dispersed resin particles will migrate towards the cathode when an electrical potential is impressed between an anode and a cathode immersed in the aqueous dispersion.

In general, most of the cationic resins prepared by this method contain from about 0.1 to 3.0, preferably from about 0.3 to 1.0 milliequivalents of cationic group per gram of resin solids.

The cationic resinous binders should preferably have weight average molecular weights, as determined by gel permeation chromatography using a polystyrene standard, of less than 100,000, more preferably less than 75,000 and most preferably less than 50,000 in order to achieve high flowability.

Blocked isocyanates which are employed in the coating compositions of the second method are organic polyisocyanates and can be those in which the isocyanato groups have been reacted with a compound so that the resultant blocked or capped isocyanate is stable to active hydrogens at room temperature but reactive with active hydrogens at elevated temperatures, usually between 90 and 200 °C. Aromatic and aliphatic including cycloaliphatic polyisocyanates may be used and representative examples include 2,4- or 2,6-toluene diisocyanate including mixtures thereof and p-phenylene diisocyanate, tetramethylene and hexamethylene diisocyanates and dicyclohexylmethane-4,4'-diisocyanate, isophorone diisocyanate, diphenylmethane-4,4'-diisocyanate and polymethylene polyphenylisocyanate. Higher polyisocyanates such as triisocyanates can be used. An example would include triphenylmethane-4,4',4"-triisocyanate. NCO-prepolymers such as reaction products of polyisocyanates with polyols such as neopentyl glycol and trimethylolpropane and with polymeric polyols such as polycaprolactone diols and triols (NCO/OH equivalent ratio greater than 1) can also be used. A mixture containing diphenylmethane-4,4'-diisocyanate and polymethylene polyphenylisocyanate is preferred because it provides better flow and reduced crystallinity with the preferred low molecular weight blocking agents methanol and ethanol described below. One of the preferred polyisocyanate mixtures is available from Mobay Chemical Co. as MONDUR MR.

The blocking agent for the polyisocyanate is one which does not contribute substantially to weight loss when the film is heated to cure. Examples of such materials are those which, although they volatilize from the film on cure, have an average molecular weight of 76 or less and would include alcohols such as methanol, ethanol and propanol and mixtures thereof. By average molecular weight is meant the sum of the molecular weights of the blocking agents multiplied by their respective percentage by weight. Thus, a blocking agent having a molecular weight greater than 76 could be used with a blocking agent having a molecular weight less than 76 as long as the weighted average were below 76. Preferred are mixtures of methanol and ethanol.

As mentioned above, the blocked polyisocyanate can be used in two similar ways. The polyisocyanate can be fully blocked, that is, no free isocyanate groups remain and then added to the cationic polymer to form a two-component resin. Or, the polyisocyanate can be partially blocked, for example, half-blocked diisocyanate, so that there is one remaining reactive isocyanate group. The half-blocked isocyanate can then be reacted with active hydrogen groups in the polymer backbone under conditions which will not unblock the blocked isocyanate group. This reaction makes the isocyanate part of the polymer molecule and a one-component resin.

Whether fully blocked or partially blocked, sufficient polyisocyanate is present with the cationic polymer so that there are about 0.1 to about 1.2 isocyanate groups for each active hydrogen, i.e., hydroxyl, primary and secondary amino and thiol.

Besides the blocked isocyanates which are described above, blocked polyisocyanates can be prepared by reacting diamines and carbonates, for example, isophorone diamine could be reacted with ethylene carbonate in a 1:2 molar ratio to form, in effect, beta-hydroxy ethyl alcohol fully blocked isophorone diisocyanate. Procedures for preparing such reaction products, both fully blocked and partially blocked polyisocyanates which are reacted into the polymer backbone, are disclosed in U.S. patent applications Ser. No. 562,320, filed Dec. 16, 1983, and Ser. No. 596,183, filed Apr. 2, 1984, both to Moriarity et al. Also, masked polyisocyanates such as aminimides and macrocyclic ureas as described in U.S. Pat. No. 4,154,391 which upon heating rearrange to cure through isocyanate groups are also considered as blocked isocyanates in accordance with the present invention.

Preferably, the molecular weight (weight average as determined by gel permeation chromatography using a polystyrene standard) is less than 15,000, more preferably less than 5000 in order to achieve high flowability.

The cationic resin and the blocked isocyanate are the principal resinous ingredients in the preferred electrocoating compositions. They are usually present in amounts of about 50 to 100 percent by weight of resin solids.

Besides the resinous ingredients described above, the electrocoating compositions usually contain a pigment which is incorporated into the composition in the form of a paste. The pigment paste is prepared by grinding or dispersing a pigment into a grinding vehicle and optional ingredients such as wetting agents, surfactants and defoamers. Grinding is usually accomplished by the use of ball mills, Cowles dissolvers, continuous attritors and the like until the pigment has been reduced to the desired size and has been wet by and dispersed by the grinding vehicle. After grinding, the particle size of the pigment should be as small as practical, generally, a Hegman grinding gauge of about 6 to 8 is usually employed.

Examples of pigment grinding vehicles are those described in European Application Publication Nos. 0107098, 0107089 and 0107088 with that of Publication No. 0107098 being preferred.

Pigments which can be employed in the practice of the second method include titanium dioxide, basic lead silicate, carbon black, strontium chromate, iron oxide, clay and phthalocyanine blue. Pigments with high surface areas and oil absorbencies should be used judiciously because they can have an undesirable effect on coalescence and flow.

The pigment-to-resin weight ratio is also fairly important and should be preferably less than 0.5:1, more preferably less than 0.4:1, and usually about 0.2 to 0.4:1. Higher pigment-to-resin solids weight ratios have also been found to adversely affect coalescence and flow.

The coating compositions used in the second method can contain optional ingredients such as plasticizers, surfactants, wetting agents, defoamers and anti-cratering agents. Examples of surfactants and wetting agents include alkyl imidazolines such as those available from Geigy Industrial Chemicals as GEIGY AMINE C, acetylenic alcohols available from Air Products and Chemicals as SURFYNOL. Examples of defoamers are FOAM KILL 63, a hydrocarbon oil-containing inert diatomaceous earth. Examples of anti-cratering agents are polyoxyalkylene-polyamine reaction products such as those described in U.S. Pat. No. 4,432,850. These optional ingredients, when present, constitute from about 0 to 30 percent by weight of resin solids. Plasticizers are preferred optional ingredients because they promote flow. Examples are high boiling water immiscible materials such as mixed ethylene-propylene oxide adducts of nonyl phenols and bisphenol A. When plasticizers are used, they are used in amounts of about 5 to 15 percent by weight resin solids.

Curing catalysts such as tin catalysts are usually present in the composition. Examples are dibutyltin dilaurate and dibutyltin oxide. When used, they are typically present in amounts of about 0.05 to 1 percent by weight tin based on weight of total resin solids.

The electrodepositable coating compositions of the second method are preferably dispersed in aqueous medium. The term "dispersion" as used within the context of the present invention is believed to be a two-phase translucent or opaque aqueous resinous system in which the resin is in the dispersed phase and water the continuous phase. The average particle size diameter of the resinous phase is about 0.1 to 10, preferably less then 5 microns. The concentration of the resinous products in the aqueous medium is, in general, not critical, but ordinarily the major portion of the aqueous dispersion is water. The aqueous dispersion usually contains from about 3 to 75, typically 5 to 50 percent by weight resin solids. Aqueous resin concentrates which are to be further diluted with water at the job site generally range from 30 to 75 percent by weight resin solids. Fully diluted electrodeposition baths generally have resin solids contents of about 3 to 25 percent by weight.

Besides water, the aqueous medium may also contain a coalescing solvent. Useful coalescing solvents include hydroccarbons, alcohols, esters, ethers and ketones. The preferred coalescing solvents include alcohols, polyols and ketones. Specific coalescing solvents include 2-propanol, butanol, 2-ethylhexanol, isophorone, 4-methoxy-2-pentanone, ethylene and propylene glycol and the monoethyl, monobutyl, monohexyl and 2-ethylhexyl ethers of ethylene glycol. The amount of coalescing solvent is not unduly critical and is generally between about 0 to 15 percent by weight, preferably about 0.5 to 5 percent by weight based on total weight of the aqueous medium.

The following examples are provided to illustrate certain aspects of the invention and it is understood that such an example does not limit the scope of the invention as described herein and defined in the appended claims. The x-ray photoelectron spectroscopy (ESCA) data in the following examples demonstrate the presence of a unique metal disilicate species within the mineralized layer, e.g., ESCA measures the binding energy of the photoelectrons of the atoms present to determine bonding characteristics. Examples 1-16 illustrate electrolytic methods for conducting the first method of the inventive process.

### EXAMPLE 1

The following apparatus and materials were employed in this Example:
Standard Electrogalvanized Test Panels, ACT Laboratories
10% (by weight) N-grade Sodium Silicate solution
12 Volt EverReady battery
Volt Ray-O-Vac Heavy Duty Dry Cell Battery
Triplett RMS Digital Multimeter
30 µF Capacitor
kΩ Resistor

A schematic of the circuit and apparatus which were employed for practicing the example are illustrated in Fig. 1. Referring now to Fig. 1, the aforementioned test panels were contacted with a solution comprising 10% sodium mineral and de-ionized water. A current was passed through the circuit and solution in the manner illustrated in Fig. 1. The test panels were exposed for 74 hours under ambient environmental conditions. A visual inspection of the panels indicated that a light-gray colored coating or film was deposited upon the test panel.

In order to ascertain the corrosion protection afforded by the mineral containing coating, the coated panels were tested in accordance with ASTM Procedure No. B 117. A section of the panels was covered with tape so that only the coated area was exposed and, thereafter, the taped panels were placed into salt spray. For purposes of comparison, the following panels were also tested in accordance with ASTM Procedure No. B 117, 1) Bare Electrogalvanized Panel, and 2) Bare Electrogalvanized Panel soaked for 70 hours in a 10% Sodium Mineral Solution. In addition, bare zinc phosphate coated steel panels (ACT B952, no Parcolene) and bare iron phosphate coated steel panels (ACT B1000, no Parcolene) were subjected to salt spray for reference.

The results of the ASTM Procedure are listed in the Table below:

| | |
|---|---|
| Panel Description | Hours in B117 Salt Spray |
| Zinc phosphate coated steel | 1 |
| Iron phosphate coated steel | 1 |
| Standard Bare Electrogalvanize Panel | ≈ 120 |
| Standard Panel with Sodium Mineral Soak | ≈ 120 |
| Coated Cathode of the Invention | 240+ |

The above Table illustrates that the instant invention forms a coating or film that imparts markedly improved corrosion resistance. It is also apparent that the process has resulted in a corrosion protective film that lengthens the life of electrogalvanized metal substrates and surfaces.

ESCA analysis was performed on the zinc surface in accordance with conventional techniques and under the following conditions:

Analytical conditions for ESCA:

| | |
|---|---|
| Instrument | Physical Electronics Model 5701 LSci |
| X-ray source | Monochromatic aluminum |
| Source power | 350 watts |
| Analysis region | 2 mm X 0.8 mm |
| Exit angle* | 50° |
| Electron acceptance angle | ±7° |
| Charge neutralization electron flood gun | |
| Charge correction | C-(C,H) in C 1s spectra at 284.6 eV |

| | |
|---|---|
| * Exit angle is defined as the angle between the sample plane and the electron analyzer lens. | |

The silicon photoelectron binding energy was used to characterize the nature of the formed species within the mineralized layer that was formed on the cathode. This species was identified as a zinc disilicate modified by the presence of sodium ion by the binding energy of 102.1 eV for the Si(2p) photoelectron.

### EXAMPLE 2

Two lead panels were prepared from commercial lead sheathing and cleaned in 6M HC1 for 25 minutes. The cleaned lead panels were subsequently placed in a solution comprising 1 wt.% N-grade sodium silicate (supplied by PQ Corporation).

One lead panel was connected to a DC power supply as the anode and the other was a cathode. A potentional of 20 volts was applied initially to produce a current ranging from 0.9 to 1.3 Amperes. After approximately 75 minutes the panels were removed from the sodium silicate solution and rinsed with de-ionized water.

ESCA analysis was performed on the lead surface. The silicon photoelectron binding energy was used to characterize the nature of the formed species within the mineralized layer. This species was identified as a lead disilicate modified by the presence of sodium ion by the binding energy of 102.0 eV for the Si(2p) photoelectron.

### EXAMPLE 3

This example demonstrates forming a mineral surface upon an aluminum substrate. Using the same apparatus in Example 1, aluminum coupons (3" x 6") were reacted to form the metal silicate surface. Two different alloys of aluminum were used, A1 2024 and A17075. Prior to the panels being subjected to the electrolytic process, each panel was prepared using the methods outlined below in Table A. Each panel was washed with reagent alcohol to remove any excessive dirt and oils. The panels were either cleaned with Alumiprep 33, subjected to anodic cleaning or both. Both forms of cleaning are designed to remove excess aluminum oxides. Anodic cleaning was accomplished by placing the working panel as an anode into an aqueous solution containing 5% NaOH, 2.4% Na₂CO₃, 2% Na₂SiO₃, 0.6% Na₃PO₄, and applying a potential to maintain a current density of 100mA/cm² across the immersed area of the panel for one minute.

Once the panel was cleaned, it was placed in a 1 liter beaker filled with 800 mL of solution. The baths were prepared using de-ionized water and the contents are shown in the table below. The panel was attached to the negative lead of a DC power supply by a wire while another panel was attached to the positive lead. The two panels were spaced 2 inches apart from each other. The potential was set to the voltage shown on the table and the cell was run for one hour.

**TABLE A**

| Example | A | B | C | D | E | F | G | H |
|---|---|---|---|---|---|---|---|---|
| Alloy type | 2024 | 2024 | 2024 | 2024 | 7075 | 7075 | 7075 | 7075 |
| Anodic | Yes | Yes | No | No | Yes | Yes | No | No |
| Cleaning | | | | | | | | |
| Acid Wash | Yes | Yes | Yes | Yes | Yes | Yes | Yes | Yes |
| Bath Solution | | | | | | | | |
| Na₂SiO₃ | 1% | 10% | 1% | 10% | 1% | 10% | 1% | 10% |
| H₂O₂ | 1% | 0% | 0% | 1% | 1% | 0% | 0% | 1% |
| Potential | 12V | 18V | 12V | 18V | 12V | 18V | 12V | 18V |

ESCA was used to analyze the surface of each of the substrates. Every sample measured showed a mixture of silica and metal silicate. Without wishing to be bound by any theory or explanation, it is believed that the metal silicate is a result of the reaction between the metal cations of the surface and the alkali silicates of the coating. It is also believed that the silica is a result of either excess silicates from the reaction or precipitated silica from the coating removal process. The metal silicate is indicated by a Si (2p) binding energy (BE) in the low 102 eV range, typically between 102.1 to 102.3. The silica can be seen by Si(2p) BE between 103.3 to 103.6 eV. The resulting spectra show overlapping peaks, upon deconvolution reveal binding energies in the ranges representative of metal silicate and silica.

### EXAMPLE 4

Using the same apparatus described in Example 1, cold rolled steel coupons (ACT laboratories) were reacted to form the metal silicate surface. Prior to the panels being subjected to the electrolytic process, each panel was prepared using the methods outlined below in Table B. Each panel was washed with reagent alcohol to remove any excessive dirt and oils. The panels were either cleaned with Metalprep 79 (Parker Amchem), subjected to anodic cleaning or both. Both forms of cleaning are designed to remove excess metal oxides. Anodic cleaning was accomplished by placing the working panel as an anode into an aqueous solution containing 5% NaOH, 2.4% Na₂CO₃, 2% Na₂SiO₃, 0.6% Na₃PO₄, and applying a potential to maintain a current density of 100mA/cm² across the immersed area of the panel for one minute.

Once the panel was cleaned, it was placed in a 1 liter beaker filled with 800 mL of solution. The baths were prepared using de-ionized water and the contents are shown in the table below. The panel was attached to the negative lead of a DC power supply by a wire while another panel was attached to the positive lead. The two panels were spaced 2 inches apart from each other. The potential was set to the voltage shown on the table and the cell was run for one hour.

**TABLE B**

| Example | AA | BB | CC | DD | EE |
|---|---|---|---|---|---|
| Substrate type | CRS | CRS | CRS | CRS¹ | CRS² |
| Anodic Cleaning | No | Yes | No | No | No |
| Acid Wash | Yes | Yes | Yes | No | No |
| Bath Solution | | | | | |
| Na₂SiO₃ | 1% | 10% | 1% | - | - |
| Potential (V) | 14-24 | 6 (CV) | 12V | - | - |
| | | | (CV) | | |
| Current Density (mA/cm²) | 23 (CC) | 23-10 | 85-48 | - | - |
| B177 | 2hrs | 1 hr | 1 hr | 0.25 hr | 0.25 hr |

| | | | | | |
|---|---|---|---|---|---|
| ¹ Cold Rolled Steel Control- No treatment was done to this panel. | | | | | |
| ² Cold Rolled Steel with iron phosphate treatment (ACT Laboratories)- No further treatments were performed | | | | | |

The electrolytic process was either run as a constant current or constant voltage experiment, designated by the CV or CC symbol in the table. Constant Voltage experiments applied a constant potential to the cell allowing the current to fluctuate while Constant Current experiments held the current by adjusting the potential. Panels were tested for corrosion protection using ASTM B117. Failures were determined at 5% surface coverage of red rust.

ESCA was used to analyze the surface of each of the substrates. ESCA detects the reaction products between the metal substrate and the environment created by the electrolytic process. Every sample measured showed a mixture of silica and metal silicate. The metal silicate is a result of the reaction between the metal cations of the surface and the alkali silicates of the coating. The silica is a result of either excess silicates from the reaction or precipitated silica from the coating removal process. The metal silicate is indicated by a Si (2p) binding energy (BE) in the low 102 eV range, typically between 102.1 to 102.3. The silica can be seen by Si(2p) BE between 103.3 to 103.6 eV. The resulting spectra show overlapping peaks, upon deconvolution reveal binding energies in the ranges representative of metal silicate and silica.

### EXAMPLE 5

Using the same apparatus as described in Example 1, zinc galvanized steel coupons (EZG 60G ACT Laboratories) were reacted to form the metal silicate surface. Prior to the panels being subjected to the electrolytic process, each panel was prepared using the methods outlined below in Table C. Each panel was washed with reagent alcohol to remove any excessive dirt and oils.

Once the panel was cleaned, it was placed in a 1 liter beaker filled with 800 mL of solution. The baths were prepared using de-ionized water and the contents are shown in the table below. The panel was attached to the negative lead of a DC power supply by a wire while another panel was attached to the positive lead. The two panels were spaced approximately 2 inches apart from each other. The potential was set to the voltage shown on the table and the cell was run for one hour.

**TABLE C**

| Example | A1 | B2 | C3 | D5 |
|---|---|---|---|---|
| Substrate type | GS | GS | GS | GS¹ |
| Bath Solution | | | | |
| Na₂SiO₃ | 10% | 1% | 10% | - |
| Potential (V) | 6 (CV) | 10 (CV) | 18 (CV) | - |
| Current Density (mA/cm²) | 22-3 | 7-3 | 142-3 | - |
| B177 | 336 hrs | 224 hrs | 216 hrs | 96 hrs |

| | | | | |
|---|---|---|---|---|
| ¹ Galvanized Steel Control- No treatment was done to this panel. | | | | |

Panels were tested for corrosion protection using ASTM B117. Failures were determined at 5% surface coverage of red rust.

ESCA was used to analyze the surface of each of the substrates. ESCA detects the reaction products between the metal substrate and the environment created by the electrolytic process. Every sample measured showed a mixture of silica and metal silicate. The metal silicate is a result of the reaction between the metal cations of the surface and the alkali silicates of the coating. The silica is a result of either excess silicates from the reaction or precipitated silica from the coating removal process. The metal silicate is indicated by a Si (2p) binding energy (BE) in the low 102 eV range, typically between 102.1 to 102.3. The silica can be seen by Si(2p) BE between 103.3 to 103.6 eV. The resulting spectra show overlapping peaks, upon deconvolution reveal binding energies in the ranges representative of metal silicate and silica.

### EXAMPLE 6

Using the same apparatus as described in Example 1, copper coupons (C110 Hard, Fullerton Metals) were reacted to form the mineralized surface. Prior to the panels being subjected to the electrolytic process, each panel was prepared using the methods outlined below in Table D. Each panel was washed with reagent alcohol to remove any excessive dirt and oils.

Once the panel was cleaned, it was placed in a 1 liter beaker filled with 800 mL of solution. The baths were prepared using de-ionized water and the contents are shown in the table below. The panel was attached to the negative lead of a DC power supply by a wire while another panel was attached to the positive lead. The two panels were spaced 2 inches apart from each other. The potential was set to the voltage shown on the table and the cell was run for one hour.

**TABLE D**

| Example | AA1 | BB2 | CC3 | DD4 | EE5 |
|---|---|---|---|---|---|
| Substrate type | Cu | Cu | Cu | Cu | Cu¹ |
| Bath Solution | | | | | |
| Na₂SiO₃ | 10% | 10% | 1% | 1% | - |
| Potential (V) | 12 (CV) | 6 (CV) | 6 (CV) | 36 (CV) | - |
| Current Density | 40-17 | 19-9 | 4-1 | 36-10 | - |
| (mA/cm²) | | | | | |
| B117 | 11 hrs | 11 hrs | 5 hrs | 5 hrs | 2 hrs |

| | | | | | |
|---|---|---|---|---|---|
| ¹ Copper Control- No treatment was done to this panel. | | | | | |

Panels were tested for corrosion protection using ASTM B117. Failures were determined by the presence of copper oxide that was indicated by the appearance of a dull haze over the surface.

ESCA was used to analyze the surface of each of the substrates. ESCA allows us to examine the reaction products between the metal substrate and the environment set up from the electrolytic process. Every sample measured showed a mixture of silica and metal silicate. The metal silicate is a result of the reaction between the metal cations of the surface and the alkali silicates of the coating. The silica is a result of either excess silicates from the reaction or precipitated silica from the coating removal process. The metal silicate is indicated by a Si (2p) binding energy (BE) in the low 102 eV range, typically between 102.1 to 102.3. The silica can be seen by Si(2p) BE between 103.3 to 103.6 eV. The resulting spectra show overlapping peaks, upon deconvolution reveal binding energies in the ranges representative of metal silicate and silica.

### EXAMPLE 7

This example illustrates the improved heat and corrosion resistance of zinc plated parking brake conduit end fitting sleeves treated in accordance with the instant invention in comparison to conventional chromate treatments.

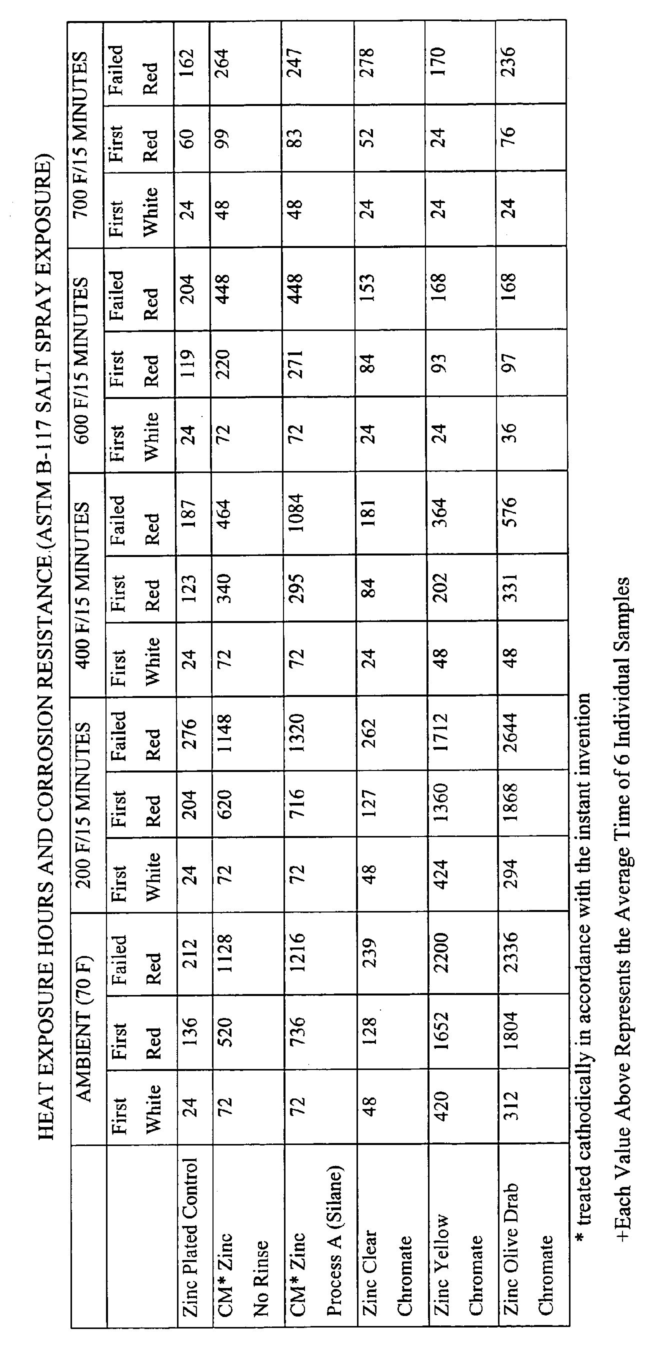

Cylinderical zinc plated conduit end-fitting sleeves measuring about 1.5 in length by about 0.50 inch diameter were divided into six groups. One group was given no subsequent surface treatment. One group was treated with a commercially available clear chromate conversion coating, one group was treated with a yellow chromate conversion and one group was treated with an olive-drab chromate conversion coating. Two groups were charged cathodically in a bath comprising de-ionized water and about 10 wt % N sodium silicate solution at 12.0 volts (70 - 80° C) for 15 minutes. One of the cathodically charged groups was dried with no further treatment. The other group was rinsed successively in deionized water, a solution comprising 10 wt % denatured ethanol in deionized water with 2 vol. % 1, 2 (Bis Triethoxysilyllethane [supplied commercially by Aldrich], and a solution comprising 10 wt % denatured ethanol in deionized water with 2 vol. % epoxy silane [supplied commercially as Silquest A-186 by OSF Specialties].

The six groups of fitting were each subdivided and exposed to either (A) no elevated temp. (B) 200°F for 15 min. (C) 400° F for 15 min. (D) 600° F for 15 min. or (E) 700° F for 15 minutes and tested in salt spray for ASTM-B117 until failure. Results are given above.

### EXAMPLE 8

This example illustrates a process comprising the inventive process that is followed by a post-treatment. The post-treatment comprises contacting a previously treated article with an aqueous medium comprising water soluble or dispersible compounds.

The inventive process was conducted in an electrolyte that was prepared by adding 349.98 g of N. sodium silicate solution to a process tank containing 2.8L of deionized water. The solution was mixed for 5-10 minutes. 0.1021g of ferric chloride was mixed into 352.33g of deionized water. Then the two solutions, the sodium silicate and ferric chloride, were combined in the processing tank with stirring. An amount of deionized water was added to the tank to make the final volume of the solution 3.5L. ACT zinc (egalv) panels were immersed in the electrolyte as the cathode for a period of about 15 minutes. The anode comprised platinum clad niobium mesh.

The following post-treatment mediums were prepared by adding the indicated amount of compound to de-ionized water:
A) Zirconium Acetate (200 g/L)
B) Zirconium Oxy Chloride (100 g/L)
C) Calcium Fluoride (8.75 g/L)
D) Aluminum Nitrate (200 g/L)
E) Magnesium Sulfate (100 g/L)
F) Tin (11) Fluoride (12 g/L)
G) Zinc Sulfate (100 g/L)
H) Titanium Fluoride (5 g/L)
I) Zirconium Fluoride (5 g/L)
J) Titanium Chloride (150 g/L)
K) Stannic Chloride (20 g/L)
The corrosion resistance of the post-treated zinc panels was tested in accordance with ASTM B-177. The results of the testing are listed below.

| | First White (hours) | First Red (hours) | Failed |
|---|---|---|---|
| Zicronium Acetate Zn | 5 | 96 | 96 |
| Zicronium Oxzychlorite Zn | 5 | 120 | 120 |
| Calcium Flouride Zn | 24 | 96 | 96 |
| Aluminum Nitrate Zn | 24 | 144 | 240 |
| Magnesium Sulfate Zn | 24 | 264 | 456 |
| Tin Fluoride Zn | 24 | 288 | 312 |
| Zinc Sulfate Zn | 5 | 96 | 96 |
| Titanium Fluoride Zn | 24 | 72 | 72 |
| Zirconium Fluoride Zn | 24 | 144 | 264 |

### EXAMPLE 9

This example illustrates the addition of dopants to the electrolyte (or bath) that is employed for operating the inventive process. In each following example, the workpiece comprises the cathode and the anode comprises platinum clad niobium mesh. The electrolyte was prepared in accordance with the method Example 32 and the indicated amount of dopant was added. An ACT test panel comprising zinc, iron or 304 stainless steel was immersed in the electrolyte and the indicated current was introduced.

| Dopant (Zirconium Acetate Bath, 200/L) | | | | | | |
|---|---|---|---|---|---|---|
| Panel | Zn | Zn | Fe | Fe | 30455 | 30455 |
| Minutes | Current (A) | Current(A) | Current (A) | Current (A) | Current (A) | Current (A) |
| 0 | 13.1 | 13.3 | 12.9 | 12.4 | 12.0 | 11.8 |
| 15 | 13.2 | 13.0 | 12.1 | 11.6 | 11.1 | 11.1 |
| Bath Temp | 74-76 C | 74-76 | 74-76 | 74-76 | 74-76 | 74-76 |

| Dopant (Zirconium Oxy Chloride Bath, 100 g/l) | | | | | | |
|---|---|---|---|---|---|---|
| 0 | 11.2 | 11.2 | 11.3 | 11.1 | 10.5 | 11.2 |
| 15 | 10.9 | 10.5 | 10.3 | 10.1 | 10.0 | 10.6 |
| Bath Temp | 74-76 C | 74-76 | 74-76 | 74-76 | 74-76 | 74-76 |

| Dopant (Calcium Fluoride Bath, 8.75 g/L) | | | | | | |
|---|---|---|---|---|---|---|
| 0 | 11.2 | 11.0 | 11.0 | 10.7 | 9.2 | 12.1 |
| 15 | 11.0 | 10.8 | 10.4 | 9.7 | 9.0 | 11.5 |
| Bath Temp | 74-76 C | 74-76 | 74-76 | 74-76 | 74-76 | 74-76 |

| Dopant (Aluminum Nitrate Bath, 200 g/L) | | | | | | |
|---|---|---|---|---|---|---|
| 0 | 12 | 12.9 | 12.5 | 12.2 | 11.8 | 11.4 |
| 15 | 13.3 | 12.7 | 12 | 11.7 | 11.1 | 11 |
| Bath Temp | 74-76 C | 74-76 | 74-76 | 74-76 | 74-76 | 74-76 |

| Dopant (Magnesium Sulfate Bath, 100 g/L) | | | | | | |
|---|---|---|---|---|---|---|
| 0 | 11.1 | 10.6 | 10.2 | 10.8 | 11.3 | 11.8 |
| 15 | 10.5 | 9.9 | 9.9 | 10.5 | 10.6 | 10.9 |
| Bath Temp | 74-76 C | 74-76 | 74-76 | 74-76 | 74-76 | 74-76 |

| Dopant (Tin Flouride Bath, 12 grams/1L) | | | | | | |
|---|---|---|---|---|---|---|
| 0 | 11 | 12.1 | 11.6 | 11.3 | 10.5 | 10.7 |
| 15 | 11.1 | 11.4 | 10.8 | 10 | 9.4 | 9.4 |
| Bath Temp | 74-76 C | 74-76 | 74-76 | 74-76 | 74-76 | 74-76 |

| Dopant (Zinc Sulflate Bath, 100 g/L) | | | | | | |
|---|---|---|---|---|---|---|
| 0 | 11.3 | 10.9 | 9.9 | 9.3 | 8.5 | 9.3 |
| 15 | 10.1 | 9.7 | 8.9 | 8.3 | 7.9 | 8 |
| Bath Temp | 74-76 C | 74-76 | 74-76 | 74-76 | 74-76 | 74-76 |

| Dopant (Titanium Flouride Bath, 5 g/L) | | | | | | |
|---|---|---|---|---|---|---|
| 0 | 12 | 12.8 | 12.1 | 13.3 | 12.9 | 12.7 |
| 15 | 12.4 | 12.4 | 11.6 | 12.9 | 12.1 | 11.8 |
| Bath Temp | 74-76 C | 74-76 | 74-76 | 74-76 | 74-76 | 74-76 |

| Dopant (Zirconium Flouride Bath, 5 g/L) | | | | | | |
|---|---|---|---|---|---|---|
| 0 | 11.3 | 11.9 | 12.1 | 12.1 | 11.7 | 11.4 |
| 15 | 11.8 | 11.7 | 11.5 | 11.3 | 10.8 | 10.7 |
| Bath Temp | 74-76 C | 74-76 | 74-76 | 74-76 | 74-76 | 74-76 |

| Dopant (Titanium (III) Chloride Bath, 150 g/L) | | | | | | |
|---|---|---|---|---|---|---|
| 0 | 11.0 | 8.8 | 9.3 | 10.0 | 10.2 | 10.2 |
| 15 | 9.4 | 8.0 | 8.6 | 9.3 | 8.9 | 8.4 |
| Bath Temp | 74-76 C | 74-76 | 74-76 | 74-76 | 74-76 | 74-76 |

| Dopant (Stannic Chloride Bath, 20 g/1L) | | | | | | |
|---|---|---|---|---|---|---|
| 0 | 10.7 | 10.2 | 9.5 | 9.7 | 9.6 | 9.3 |
| 15 | 9.3 | 9.1 | 8.8 | 8.6 | 8.3 | 7.9 |
| Bath Temp | 74-76 C | 74-76 | 74-76 | 74-76 | 74-76 | 74-76 |

### EXAMPLE 10

This example illustrates operating the inventive process wherein the anode comprises a nickel mesh. The cathode comprised ACT electrogalvanized panels.

An electrolyte was prepared by combining 349.98g of N. sodium silicate solution, 0.1021 g of FeCl₃, and enough distilled water to bring the total volume of the solution to 3.5L. The zinc panels were each run for fifteen minutes and set out to dry without rinsing. Before each run and after the panels had completely dried, the zinc panels were weighed to determine weight gain experienced by the cathode during the electrochemical process. The nickel mesh anodes were also weighed at the start of the experiment, after 10 runs, after 20 runs, and after 23 runs. This allows the weight gain of the anodes to be calculated. The voltage was set at 12.0V for all of the runs.

The data for each of the 23 runs completed can be found in the Table below. The data below illustrates that the current and voltage passing between the electrodes stayed stable over all of the runs.

| Run | Current (A) | | Multimeter (V) | | Weight Change Cathode |
|---|---|---|---|---|---|
| # | Start | Finish | Start | Finish | (g) |
| 1 | 12.7 | 13.9 | 8.40 | 6.88 | 0.014 |
| 2 | 13.5 | 13.3 | 10.32 | 10.15 | 0.037 |
| 3 | 13.1 | 13.2 | 10.58 | 10.14 | 0.032 |
| 4 | 12.6 | 12.8 | 10.30 | 9.91 | 0.016 |
| 5 | 12.7 | 13.2 | 10.04 | 10.04 | 0.016 |
| 6 | 13.5 | 14.0 | 9.68 | 9.63 | 0.037 |
| 7 | 13.3 | 13.8 | 9.03 | 9.72 | 0.038 |
| 8 | 13.4 | 13.7 | 9.38 | 9.44 | 0.035 |
| 9 | 13.3 | 13.6 | 9.76 | 8.96 | 0.038 |
| 10 | 9.0 | 9.2 | 10.45 | 10.34 | 0.035 |
| 11 | 11.0 | 11.7 | 10.06 | 9.96 | 0.027 |
| 12 | 10.8 | 11.8 | 9.97 | 9.60 | 0.033 |
| 13 | 11.2 | 11.9 | 10.13 | 9.87 | 0.014 |
| 14 | 11.7 | 12.0 | 9.96 | 10.09 | 0.029 |
| 15 | 11.4 | 12.0 | 9.60 | 9.44 | 0.030 |
| 16 | 11.7 | 12.1 | 10.15 | 9.94 | 0.030 |
| 17 | 12.1 | 12.4 | 9.82 | 10.10 | 0.028 |
| 18 | 12.1 | 12.4 | 10.33 | 10.26 | 0.031 |
| 19 | 11.7 | 12.2 | 10.77 | 10.28 | 0.030 |
| 20 | 11.9 | 12.3 | 10.37 | 10.16 | 0.029 |
| 21 | 8.4 | 9.4 | 8.85 | 9.10 | 0.002 |
| 22 | 9.7 | 9.9 | 10.53 | 10.57 | 0.022 |
| 23 | 9.4 | 10.0 | 10.39 | 10.52 | 0.022 |

### EXAMPLE 11

A base silicate medium solution comprising 800 mL of distilled water + 100 mL of PQ N Sodium Silicate solution was prepared (hereinafter referred to as 1:8 solution). The PQ N Sodium Silicate solution is 8.9 wt % Na₂O and 28.7 wt % SiO₂. Galvanized steel panels were subjected to the electrolytic mineralization process in the 1:8 sodium silicate solution at 75°C for 15 minutes at 12 V. Following deposition, one set of panels was heated at 100° C of one hour. As a comparison, another set of mineralized panels was left to dry in air for 24 hours. Both sets were rinsed and corrosion tested in 0.5 M Na2SO4 solution. The Table below shows the results of the corrosion tests.

| Corrosion Resistance of surfaces mineralized in 1:8 sodium silicate at 12 V for 15 minutes. Resistance (Ω-cm2) in pH 4, 0.5 M Na₂SO₄ | | |
|---|---|---|
| Location | No Heating | Heated at 100° C for 1 hour |
| 1 | 747 | 4054.7 |
| 2 | 2975 | 1.2 x 10⁴ |
| 3 | 2317 | 1.1 x 10⁴ |
| Avg. | 2013 | 9018.2 |
| High | 2975 | 1.2 x 10⁴ |
| Low | 747 | 4054.7 |

### EXAMPLE 12

Galvanized steel panels were subjected to the electrolytic process in the 1:8 sodium silicate at 75°C for 15 minutes at 12 V. Following deposition, the panels were heated at 100° C, 125° C, 150° C, 175° C and 200° C for 1 hour. The Table below show the corrosion resistance measured in 0.5 M Na₂SO₄.

| Corrosion resistance of surfaces mineralized in 1:8 sodium silicate at 12 V for 15 minutes and heated at various temperatures. Resistance (Ω-cm2) in pH 4, 0.5 M Na₂SO₄ | | | | | |
|---|---|---|---|---|---|
| Location | 100° C | 125° C | 150° C | 175° C | 200° C |
| 1 | 4054.7 | 702.9 | 8.2 x 10⁴ | 1.2 x 10⁴ | 2.1 x 10⁵ |
| 2 | 1.2 x 10⁴ | 6.8 x 10⁴ | 8.4 x 10⁴ | 1600 | 780.7 |
| 3 | 1.1 x 10⁴ | 4.0 x 10⁴ | 1644.3 | 8.2 x 10⁴ | 2.3 x 10⁴ |
| Avg. | 9018.2 | 3.5 x 10⁴ | 5.6 x 10⁴ | 6.8 x 10⁴ | 7.8 x 10⁴ |
| High | 1.2 x 10⁴ | 6.8 x 10⁴ | 8.4 x 10⁴ | 1.2 x 10⁵ | 2.1 x 10⁵ |
| Low | 4054.7 | 702.9 | 1644.3 | 1600 | 780.7 |

Similarly prepared and heated samples were and corrosion tested after one weeks immersion in deionized water. The corrosion resistance is shown below. The sample heated at 175° C has the highest resistance after 1 week.

| Corrosion resistance of surfaces mineralized in 1:8 sodium silicate at 12 V for 15 minutes and heated at various temperatures and immersed in water for one week. Resistance (Ω-cm2) in pH 4, 0.5 M Na₂SO₄ | | | | | |
|---|---|---|---|---|---|
| Days | 100° C | 125° C | 150° C | 175° C | 200° C |
| Initial | 1.0 x 10⁴ | 1.7 x 10⁴ | 2.4 x 10⁵ | 2.8 x 10⁵ | 3.5 x 10⁵ |
| 1 | 1641.4 | 1177.5 | 2319.3 | 6508.8 | 4826 |
| 4 | 822.8 | 1077.1 | 1205.4 | 3560.9 | 2246.3 |
| 7 | 844.2 | 753.1 | 1240.5 | 1256 | 1109 |

### EXAMPLE 13

Different concentration of sodium silicate solutions were prepared from the PQ stock solution. For example, a 1:1 solution was prepared by adding 1 part PQ solution to 1 part water. Galvanized steel panels were subjected to the electrolytic process in 1:8, 1:4, 1:3, 1:2, and 1.1 sodium silicate at 75°C for 15 minutes at 12 V. Following deposition, the panels were heated at 100° C for one hour. The corrosion resistance of the samples is shown in the Table below.

| Corrosion resistance of surfaces mineralized in various concentrations of sodium silicate at 12 V for 15 minutes and heated at 100° C for one hour. Resistance (Ω-cm2) in pH 4, 0.5 M Na₂SO₄ | | | | | |
|---|---|---|---|---|---|
| Location | 1:8 | 1:4 | 1:3 | 1:2 | 1:1 |
| 1 | 4054.7 | 2.2 x 10⁴ | 7.0 x 10⁵ | 3.5 x 10⁵ | 4.4 x 10⁵ |
| 2 | 1.2 x 10⁴ | 1.7 x 10⁴ | 1.8 x 10⁵ | 3.0 x 10⁵ | 1.3 x 10⁶ |
| 3 | 1.1 x 10⁴ | 1.0 x 10⁴ | 1.0 x 10⁶ | 1.7 x 10⁶ | 8.6 x 10⁵ |
| Avg. | 9018.2 | 1.6 x 10⁴ | 6.3 x 10⁵ | 7.8 x 10⁵ | 8.7 x 10⁵ |
| High | 1.2x 10⁴ | 2.2 x 10⁴ | 1.8 x 10⁵ | 1.7 x 10⁶ | 1.3 x 10⁶ |
| Low | 4054.7 | 1.0 x 10⁴ | 1.0 x 10⁶ | 3.0 x 10⁵ | 4.4 x 10⁵ |

### EXAMPLE 14

Galvanized steel panels were subjected to the electrolytic process in 1:3 sodium silicate at 75°C for 15 minutes at 3V, 6V, 9V, 12V and 15V. All of the samples were heated at 100° C for one hour and then corrosion tested. The results are shown below. The optimum deposition voltage for these samples appears to be 12V. Above that no further significant increase in corrosion resistance is observed.

| Corrosion resistance of surfaces mineralized in 1:3 sodium silicate at various potentials for 15 minutes and heated at 100° C for one hour. Resistance (Ω-cm2) in pH 4, 0.5 M Na₂SO₄ | | | | | |
|---|---|---|---|---|---|
| Location | 3 V | 6 V | 9 V | 12 V | 15 V |
| 1 | 6.4 x 10⁴ | 1.0 x 10⁵ | 2.9 x 10⁴ | 4.5 x 10⁵ | 5.5 x 10⁵ |
| 2 | 7.9 x 10⁴ | 1.3 x 10⁵ | 2.8 x 10⁵ | 2.4 x 10⁵ | 9.7 x 10⁵ |
| 3 | 1.0 x 10⁴ | 3.9 x 10⁴ | 1.6 x 10⁵ | 6.4 x 10⁵ | 1.0 x 10⁵ |
| Avg. | 5.1 x 10⁴ | 9.0 x 10⁴ | 1.6 x 10⁵ | 4.4 x 10⁵ | 5.4 x 10⁵ |
| High | 7.9 x 10⁴ | 1.3 x 10⁵ | 2.8 x 10⁵ | 6.4 x 10⁵ | 9.7 x 10⁵ |
| Low | 1.0 x 10⁴ | 3.9 x 10⁴ | 2.9 x 10⁴ | 2.4 x 10⁵ | 1.0 x 10⁵ |

### EXAMPLE 15

Galvanized steel panels were subjected to the electrolytic process in 1:3 sodium silicate at 75°C and 12V for 15 minutes. The samples were heated for one hour at 40° C, 75° C, 100° C, 125° C, 150° C, 175° C and 200° C. The Table below shows the corrosion resistance of each of the samples.

| Corrosion resistance of surfaces mineralized in 1:3 sodium silicate at 12 V for 15 minutes, heated at various temperatures for one hour and then immersed in water for a week. Resistance (Ω-cm2) in pH 4, 0.5 M Na₂SO₄ | | | | | | | |
|---|---|---|---|---|---|---|---|
| Days | 40° C | 75° C | 100° C | 125° C | 150° C | 175° C | 200° C |
| Initial | 3833.4 | 7.8 x 10⁴ | 7.1 x 10⁵ | 1.1 x 10⁶ | 3.5 x 10⁵ | 3.8 x 10⁵ | 8.2 x 10⁵ |
| 1 | 921.3 | 1538.3 | 2570.2 | 8211.7 | 9624.7 | 9066 | 21218 |
| 4 | 500.4 | 822.8 | 846.8 | 3782 | 5010.8 | 12096 | 20715 |
| 7 | 440.2 | 644.2 | 811.8 | 854.6 | 2271.1 | 4153.9 | 7224.5 |

### Example 16

This example illustrates that additives, such as small amounts of transition metal chloride salts, sodium citrate, ammonium citrate or mixtures of these increase the stability of the bath; promote an improved the mineralization process, reduce the microscopic cracks observed in the mineralization coating and increases the stability and content of the silica in the mineralized coatings.

A bath was formulated in the following manner: 1 part PQ solution was diluted into one part water and to this 1 g /l of Nickel (II) chloride and 1 g /l cobalt (II) chloride were dissolved. The mineralization process was carried out at a potential of 8 V, a current of 5 amps for 15 minutes. The temperature of the bath was maintained at 60 C. After being mineralized, the panels were subjected to post-treatment temperatures ranging from 25 C to 120 C until the panel was dry.

Data representative of the corrosion resistance (Ω-cm²) in pH 4, 0.5 M Na₂SO₄ Solution of the samples mineralized in Mineralize in 1:3 PQ Bath at 12V for 15 minutes is given below

| Location | 25 C dry | 120 C dry |
|---|---|---|
| 1 | 4250 | 2.1 x 10⁵ |
| 2 | 2153 | 4.1 x 10⁵ |
| 3 | 2960 | 3.5 x 10⁵ |
| Average Value | 3121 | 3.1 x 10⁵ |

Data representative of the corrosion resistance (Ω-cm²) in pH 4, 0.5 M Na₂SO₄ Solution of the samples mineralized in Mineralize in 1:1 PQ Bath with NiC12 and CoC12 at 8V, 5 A for 15 minutes is given below

| Location | 25 C dry | 120 C dry |
|---|---|---|
| 1 | 38968 | 9.3 x 10⁵ |
| 2 | 15063 | 1.1 x 10⁶ |
| 3 | 18024 | 4.5 x 10⁵ |
| Average Value | 24018 | 8.3 x 10⁵ |

EDAX analysis of the samples prepared in the additive containing bath gave the following exemplary data:

| | Additive Bath | Control |
|---|---|---|
| Atomic % | | |
| Oxygen | 0.000 | 0.000 |
| Silicon | 90.439 | 78.709 |
| Iron | 8.783 | 21.291 |
| Cobalt | 0.150 | 0 |
| Nickel | 0.628 | 0 |
| Conc. (Wt %) | | |
| Oxygen | 0.00 | 0.000 |
| Silicon | 82.570 | 61.357 |
| Iron | 15.944 | 38.643 |
| Cobalt | 0.288 | 0 |
| Nickel | 1.198 | 0 |

In view of the above data, the addition of additives increases the silicon content of the mineralized layer. Further, it should be appreciated that the addition of additives decreases the operating conditions of the process (e.g. temperature and voltage), and thereby increases the stability of the bath. Finally, the use of additives increases the corrosion prevention properties of the mineralized layer.

### EXAMPLE 17

This example illustrates evaluating the inventive process for forming a coating on bare and galvanized steel was evaluated as a possible phosphate replacement for E-coat systems. The evaluation consisted of four categories: applicability of E-coat over the mineral surface; adhesion of the E-coat; corrosion testing of mineral/E-coat systems; and elemental analysis of the mineral coatings. Four mineral coatings (Process A, B, C, D) were evaluated against phosphate controls. The e-coat consisted of a cathodically applied blocked isocyanate epoxy coating as supplied by PPG® as Powercron® 645. The e-coating process was practiced using a electrocoating bath approximately room temperature having a solid content of about 10-11 wt.% and a pH of about 6. The equipment used for e-coating was of the type as described in U.S. Patent No. 6,391,180. The e-coat was applied at a thickness of about 10 microns. Curing was accomplished at a drying temperature of 200-220 °C

**TABLE Q**

| Process | SiO₃ conc. | Potential | Temperature | Time |
|---|---|---|---|---|
| A1 | 1% | 6V | 25C | 30 min |
| A2 | 1% | 6V | 25C | 15 min |
| B1 | 10% | 12V | 75C | 30 min |
| B2 | 10% | 12V | 75C | 15 min |
| C | 15% | 12V | 25C | 30 min |
| D | 15% | 18V | 75C | 30 min |

It was found that E-coat could be uniformly applied to the mineral surfaces formed by processes A-D with the best application occurring on the mineral formed with processes A1, A2, and B1, and B2. It was also found that the surfaces A1, A2 and B1, B2 had no apparent detrimental effect on the E-coat bath or on the E-coat curing process. The adhesion testing showed that surfaces A1, A2, B1, B2, and D had improved adhesion of the E-coat to a level comparable with that of phosphate. Similar results were seen in surfaces C and D over galvanized steel. Surfaces B1, B2 and D generally showed more corrosion resistance than the other variations evaluated.

To understand any relation between the coating and performance, elemental analysis was done. It showed that the depth profile of coatings B1, B2 and D was significant, >5000 angstroms.

This example can be repeated by using zinc-die cast components that are treated in accordance with previous Examples and then e-coated with a commercially available e-caoting such as that supplied by PPG® as Powercron® 645. The e-coat can comprise any suitable epoxy or epoxy functional e-coating. The e-coating process could be practiced using the equipment disclosed in U.S. Patent No. 6,391,180.

### EXAMPLE 18

This example illustrates the adhesion of different e-coat systems on the mineral coated surface of galvanized steel panels.

Galvanized steel panels were mineral coated in the same manner as in process B 1 of Example 17 and subsequently e-coated with different e-coat systems. The e-coat systems tested included cathodic epoxy (Example 18A), cathodic acrylic (Example 18B), anodic epoxy (Example 18C), anodic acrylic (Example 18D).

Furthermore, in a comparison experiment galvanized steel panels of the same type as in Examples 18A-D were subjected to a conventional phosphating treatment utilizing zinc and iron phosphate instead of applying the mineral coating. After phosphating treatment the panels were rinsed, cleaned and subsequently e-coated with a cathodic epoxy resin.

Five specimens of the coated panels were subjected to corrosion testing in accordance with ASTM B 117 (salt spray test). The coated panels were placed in the salt spray cabin. At 500 hours the specimens were removed from the salt spray atmosphere and visually inspected. Specimens were rated 1 = excellent, 2 = good, 3 = satisfactory, 4 = poor, and 5 = very poor. Specimens rated 1 showed no change in optical appearance. Furthermore, after 500 hours in the salt spray atmosphere, the specimens were physically inspected by placing several cuts into the resin with a sharp knife and evaluating the adhesion strength of the resin coating. Adhesion strength of the resin coating was rated 1 = excellent, 2 = good, 3 = satisfactory, 4 = poor, and 5 = very poor. The test results are summarized in Table R.

Furthermore, five specimens of the coated panels were subjected to adhesion testing in accordance with ISO 2409 (cross cut test). Failures were determined at >15% of the cross cut section. The specimens were rated 0 (best) to 5 (worst). Ratings 0-3 were assigned the grade "pass" (<15%). Ratings 4-5 were assigned the grade "fail" (>15%). The test results are summarized in Table R.

**TABLE R**

| **Example** | **E-Coat** | **Salt Spray Test after 1000h** **(ASTM B 117)** | | **Cross-Cut-Test** **(ISO 2409)** |
|---|---|---|---|---|
| | | **Corrosion** | **Adhesion** | |
| **18A** | Cathodic epoxy^{a} | 1 | 1 | 1 |
| **18B** | Cathodic acrylic^{b} | 3 | 2 | 2 |
| **18C** | Anodic epoxy^{c} | 2 | 2 | 2 |
| **18D** | Anodic acrylic^{d} | 3 | 2 | 3 |
| **Comparison**^{**e**} | Cathodic epoxy^{a} | 1 | 1 | 1 |

| | | | | |
|---|---|---|---|---|
| ^{a} PPG® Powercron® 645 | | | | |
| ^{b} PPG® Powercron® 925 | | | | |
| ^{c} PPG® Powercron® 150 | | | | |
| ^{d} PPG® Powercron® 330 | | | | |
| ^{e} conventional phosphating treatment (no silicate layer) | | | | |

The results show that the inventive phosphate free mineral coated panels having an e-coat on the basis of a cathodic epoxy resin exhibit excellent corrosion resistance and adhesion properties (Example 18A), said properties being comparable to those of a panel with conventional phosphate treatment (Comparsion Experiment). The results also show that the panels of Examples 18B, 18D and 18D showed less corrosion resistance and adhesion than the other samples tested.

While the apparatus, compositions and methods of this invention have been described in terms of preferred or illustrative embodiments, it will be apparent to those of skill in the art that variations may be applied to the process described herein without departing from the concept and scope of the invention. All such similar substitutes and modifications apparent to those skilled in the art are deemed to be within the scope and concept of the invention.

## Claims

1. A process for applying a multilayer protective coating to a substrate having an electrically conductive surface, comprising:
a first method of forming a silicate layer upon said electrically conductive surface, said first method comprising contacting at least a portion of said surface with a first medium comprising at least one silicate and having a basic pH and wherein said first medium is substantially free of chromates, to form a silicate layer, and
a second method of electrolytically applying a synthetic resin layer upon the surface of said silicate layer, said second method comprising contacting at least a portion of said surface of said silicate layer with a second medium comprising a resinous ingredient, applying an electric current to said second medium wherein said surface is employed as an electrode, to form a synthetic resin layer.

2. The process of claim 1, wherein said substrate is a metal substrate.

3. The process of claim 1 or 2, wherein said substrate is a metal substrate made of a material selected from the group consisting of steel, zinc or zinc/nickel coated steel, aluminum, zinc or zinc/nickel coated aluminum, iron, zinc or zinc/nickel coated iron, nickel, copper, zinc, magnesium, and alloys thereof.

4. The process of any one of claims 1 to 3, wherein said first method further comprises introducing an electric current to said first medium wherein said surface is employed as a cathode.

5. The process of any one of claims 1 to 4, wherein said first medium is an aqueous medium.

6. The process of any one of claims 1 to 5, wherein the pH of said first medium is adjusted to a value of about 10 to about 11.5.

7. The process of any one of claims 1 to 6, wherein said first medium contains sodium silicate.

8. The process of any one of claims 1 to 7, wherein said first medium contains silicate in a concentration of about 1 to about 25 wt.%, in particular about 5 to 15 wt.%.

9. The process of any one of claims 1 to 8, wherein in said first method said silicate layer is applied at a thickness of about 100 to about 2500 Angstroms.

10. The process of any one of claims 1 to 9, wherein said first method further comprises:
rinsing the surface; and
drying the surface.

11. The process of any one of claims 1 to 10, wherein said second medium is an aqueous medium.

12. The process of any one of claims 1 to 11, wherein said resinous ingredient in said second method comprises a resin selected from the group consisting of cathodically applied electrocoating epoxy resins, anodically applied electrocoating epoxy resins, cathodically applied electrocoating acrylic resins, and anodically applied electrocoating acrylic resins.

13. The process of any one of claims 1 to 12, wherein said resinous ingredient in said second medium comprises a cationic resin and a crosslinking agent.

14. The process of any one of claims 1 to 13, wherein said resinous ingredient in said second medium comprises a cathodically applied blocked isocyanate epoxy resin.

15. The process of any one of claims 1 to 14, wherein the pH of said second medium is adjusted to a value of from about 4.5 to about 6.5.

16. The process of any one of claims 1 to 15, wherein said surface in said second method is employed as cathode.

17. The process of any one of claims 1 to 16, wherein said second medium contains said ionic resinous ingredient in a concentration of about 1 to about 25 wt.%, in particular about 5 to about 15 wt.%.

18. The process of any one of claims 1 to 17, wherein in said second method said synthetic resin layer is applied at a thickness of about 5 to about 25 microns, in particular about 8 to about 15 microns.

19. The process of any one of claims 1 to 18, wherein said second method further comprises drying said synthetic resin layer.

20. The process of any one of claims 1 to 19, wherein said second method further comprises drying said synthetic resin layer at a temperature of about 180 to about 250 °C.

21. A corrosion resistant article comprising a metal body and a substantially chromate free protective coating applied on at least one surface of said metal body, said protective coating comprising
a silicate layer comprising at least one silicate; and
a synthetic resin layer comprising at least one electrolytically applied synthetic resin.

22. The article of claim 21, wherein said metal body is made from a metal selected from the group consisting of steel, stainless steel, aluminum, iron, nickel, copper, zinc, magnesium, and alloys thereof.

23. The article of claim 21 or 22, wherein said silicate layer comprises electrolytically applied silicate.

24. The article of any one of claims 21 to 23, wherein said silicate layer contains an alkali silicate.

25. The article of any one of claims 21 to 24, wherein said silicate layer comprises a disilicate mineral structure.

26. The article of any one of claims 21 to 25, wherein said silicate layer has a thickness of about 100 to about 2500 Angstroms.

27. The article of any one of claims 21 to 26, wherein said synthetic resin layer comprises a resin selected from the group consisting of cathodically applied electrocoating epoxy resins, anodically applied electrocoating epoxy resins, cathodically applied electrocoating acrylic resins, and anodically applied electrocoating acrylic resins.

28. The article of any one of claims 21 to 27, wherein said synthetic resin layer comprises a cathodically applied blocked isocyanate epoxy resin.

29. The article of any one of claims 21 to 28, wherein the synthetic resin layer has a thickness of about 5 to about 25 microns.

30. The article of any one of claims 21 to 29, wherein said protective coating further comprises a zinc layer comprising zinc, said zinc layer being interposed between the surface of said metal body and said silicate layer.

31. The article of claim 30, wherein said zinc layer is applied between said metal body and said silicate layer.

32. The article of claim 30, wherein said zinc layer comprises electrolytically applied zinc.

33. The article of claim 30, wherein said zinc layer has a thickness of about 1 to about 75 microns.

34. The article of any one of claims 21 to 33, wherein said protective coating is substantially phosphate free

35. The article of any one of claims 21 to 34, wherein said protective coating comprises zinc and said article has an ASTM B117 exposure to white rust of greater than 200 hours.
